(19) Europäisches Patentamt
European Patent Office
Office européen des brevets

(11) EP 0 927 208 B1

(12) # EUROPÄISCHE PATENTSCHRIFT

(45) Veröffentlichungstag und Bekanntmachung des Hinweises auf die Patenterteilung:
**02.01.2002 Patentblatt 2002/01**

(21) Anmeldenummer: **97944839.6**

(22) Anmeldetag: **05.09.1997**

(51) Int Cl.7: **C08F 265/06**, C08F 291/00, C09D 151/00, C09J 151/00

(86) Internationale Anmeldenummer:
**PCT/EP97/04843**

(87) Internationale Veröffentlichungsnummer:
**WO 98/10001 (12.03.1998 Gazette 1998/10)**

(54) **VERFAHREN ZUR HERSTELLUNG WÄSSRIGER POLYMERISATDISPERSIONEN**
PROCESS FOR PRODUCING AQUEOUS POLYMER DISPERSIONS
PROCEDE DE PREPARATION DE DISPERSIONS AQUEUSES DE POLYMERISATS

(84) Benannte Vertragsstaaten:
**DE ES FR GB IT NL**

(30) Priorität: **09.09.1996 DE 19636490**
**12.06.1997 DE 19724915**

(43) Veröffentlichungstag der Anmeldung:
**07.07.1999 Patentblatt 1999/27**

(73) Patentinhaber: **BASF AKTIENGESELLSCHAFT**
**67056 Ludwigshafen (DE)**

(72) Erfinder:
- **ZHAO, Cheng-Li**
**D-68723 Schwetzingen (DE)**
- **ROSER, Joachim**
**D-68165 Mannheim (DE)**
- **WISTUBA, Eckehardt**
**D-67098 Bad Dürkheim (DE)**
- **SCHULER, Bernhard**
**D-68199 Mannheim (DE)**
- **MATHAUER, Klemens**
**D-67063 Ludwigshafen (DE)**

(74) Vertreter: **Kinzebach, Werner, Dr. et al**
**Reitstötter, Kinzebach & Partner, Postfach 21 11 60**
**67011 Ludwigshafen (DE)**

(56) Entgegenhaltungen:
**EP-A- 0 507 634**
**EP-A- 0 623 659**
**EP-A- 0 710 680**
**WO-A-95/13418**
**WO-A-96/14355**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 927 208 B1

## Beschreibung

Die vorliegende Erfindung betrifft ein Verfahren zur Herstellung wäßriger Polymerisatdispersionen, bei dem man zunächst aus Monomeren, die wenigstens eine ethylenisch ungesättigte Gruppe aufweisen, nach der Methode der radikalischen wäßrigen Emulsionspolymerisation ein in wäßrigem Medium in disperser Verteilung befindliches Polymerisat 1 erzeugt und danach in einer oder mehreren aufeinanderfolgenden Polymerisationsstufen i weitere Monomere in Gegenwart des im wäßrigen Medium in disperser Verteilung befindlichen Polymerisats 1 radikalisch polymerisiert, wobei

a) das Polymerisat 1 eine Glasübergangstemperatur $Tg^1$ aufweist;

b) die in jeder der Polymerisationsstufen i polymerisierten Monomeren so beschaffen sind, daß bei isolierter (statistischer) (Co)Polymerisation dieser Monomere ein Polymerisat i erhalten würde, dessen Glasübergangstemperatur mit zunehmendem Molekulargewicht dem Grenzwert $Tg^i$ zustrebt;

c) für jedes $Tg^i$ die Differenz $Tg^i$-$Tg^1$ ≥10 °C beträgt;

d) die Menge der zur Herstellung des in disperser Verteilung befindlichen Polymerisats 1 polymerisierten Monomere, bezogen auf die Menge der im Verfahren insgesamt polymerisierten Monomeren, > 90 Gew.-% und ≤99,9 Gew.-% beträgt;

e) die Gesamtmenge der in allen Polymerisationsstufen i polymerisierten Monomere, bezogen auf die Gesamtmenge der im Verfahren insgesamt polymerisierten Monomere, ≥0,1 Gew.-% und < 10 Gew.-% beträgt;

f) in jeder der Polymerisationsstufen i die Zugabe der in dieser Polymerisationsstufe i zu polymerisierenden Monomere ins Polymerisationsgefäß so erfolgt, daß bis zur Beendigung der Zugabe der Polymerisationsumsatz $U^i$ von in der Stufe i zu polymerisierenden und dem Polymerisationsgefäß bereits zugegebenen Monomere zu keinem Zeitpunkt 50 mol-% überschreitet;

g) die Gesamtmenge der zur Herstellung des Polymerisats 1 polymerisierten Monomere, abgesehen von Monomeren mit zwei konjugierten ethylenisch ungesättigten Gruppen, nicht mehr als 5 Gew.-% an Monomeren umfaßt, die mehr als eine ethylenisch ungesättigte Gruppe aufweisen.

$U^i$ ist dabei als der prozentuale Anteil der für die Polymerisation in der i-ten Polymerisationsstufe bereits ins Polymerisationsgefäß zugegebenen Monomeren definiert, dessen Polymerisation zum Zeitpunkt der Zugabe weiterer in der Polymerisationsstufe i zu polymerisierender Monomere bereits erfolgt ist.

Eine Polymerisationsstufe i ist als die Zeitspanne definiert, innerhalb der die Polymerisationsgeschwindigkeit (die pro Zeiteinheit polymerisierte molare Menge an Monomeren) von einem geringsten Wert ausgehend zunächst zunimmt, bis sie nach Durchlaufen eines maximalen Werts entweder durch Verbrauch der in dieser Stufe zu polymerisierenden Monomeren und/oder des Polymerisationsinitiators und/oder durch gezielte äußere Einflußnahme (z.B. Absenkung der Polymerisationstemperatur, Zusatz von Polymerisationsinhibitoren) wieder abnimmt, um mit Beginn der nächsten Polymerisationsstufe wieder zuzunehmen.

Ferner betrifft die vorliegende Erfindung die in Anwendung des erfindungsgemäßen Verfahrens erhältlichen wäßrigen Polymerisatdispersionen sowie deren Verwendung zum Beschichten, Kleben, Dichten oder Imprägnieren, wobei die Verwendung als Bindemittel für feinteilige mineralische und/oder organische Substanzen (Füllstoffe und/oder Pigmente) enthaltende Beschichtungsmassen oder Formkörper und als Haftklebstoffe mit verbesserter Kohäsion bevorzugt ist.

Wäßrige Polymerisatdispersionen sind fluide Systeme, die als disperse Phase in wäßrigem Dispergiermedium Polymerisatknäuel (Polymerisatteilchen) in im wesentlichen stabiler disperser Verteilung befindlich enthalten.

Ebenso wie Polymerisatlösungen beim Verdampfen des Lösungsmittels, weisen wäßrige Polymerisatdispersionen beim Verdampfen des wäßrigen Dispergiermediums die Fähigkeit auf, Polymerisatfilme zu bilden, weshalb wäßrige Polymerisatdispersionen in vielfacher Weise als Bindemittel, z.B. für Anstrichfarben oder Massen zum Beschichten von Holz, Dächern oder Leder und als Haftklebstoffe, Anwendung finden.

In zahlreichen Fällen sind sowohl solche Polymerisatfilme bzw. die sie enthaltenden Beschichtungsmassen als auch das mit ihnen beschichtete Substrat großen Feuchtigkeits- und/oder Temperaturschwankungen ausgesetzt, die sowohl extreme Ausdehnungen als auch Kontraktionen der Filme und/oder des Substrats, auf dem sie haften, bedingen, d.h., in vielen Fällen treten in den Filmen hohe Spannungen auf, die die Filme nur dann unbeschädigt (ohne Bruch- bzw. Rißbildung) überstehen können, wenn die zur Herbeiführung ihres Bruchs erforderliche Arbeit möglichst

hoch ist.

Ein geeignetes Maß für die an einem Polymerisatfilm zu verrichtende Brucharbeit ist gemäß der EP-B 264 903 das Produkt aus Reißdehnung und Reißfestigkeit des Polymerisatfilms. Vorteilhafte Polymerisatfilme sind demnach solche, deren Produkt aus Reißdehnung und Reißfestigkeit erhöht ist, wobei unter den ein solches erhöhtes Produkt aufweisenden Polymerisatfilmen diejenigen bevorzugt sind, die gleichzeitig sowohl eine erhöhte Reißdehnung als auch eine erhöhte Reißfestigkeit aufweisen. Letztere Zielsetzung ist besonders schwer zu verwirklichen, da üblicherweise Maßnahmen zur Verbesserung der Reißfestigkeit die Reißdehnung beeinträchtigen und umgekehrt (üblicherweise erfolgt die Bestimmung dieser mechanischen Eigenschaften eines Polymerisatfilms bei einer oberhalb dessen Tg liegenden Temperatur).

Die EP-A 710 680 beschreibt Polymerisatdispersionen, die dadurch erhalten werden, dass man nacheinander eine erste Monomerzusammunsetzung 1 und danach eine zweite Monomerzusammensetzung 2 nach der Methode der radikalischen wassrigen Emulsions polymerisation polymerisiert, wobei der Monomerumsatz in der 2. Polymerisationsstufe stets > 90% ist.

Die Aufgabe der vorliegenden Erfindung bestand daher darin, ein Verfahren zur Verfügung zu stellen, dessen Anwendung einerseits eine Erhöhung der zur Herbeiführung des Bruchs eines Films einer wäßrigen Polymerisatdispersion ("eines Polymerisats 1") erforderlichen Arbeit gestattet und dabei andererseits gleichzeitig sowohl eine möglichst hohe Reißdehnung als auch eine möglichst hohe Reißkraft des Polymerisatfilms gewährleistet.

Überraschenderweise wurde gefunden, daß diese Aufgabe durch das eingangs definierte Verfahren zur Herstellung einer wäßrigen Polymerisatdispersion gelöst wird.

Haftklebstoffe bilden einen bleibenden klebrigen Film, der schon unter geringem Druck bei Raumtemperatur an den verschiedensten Oberflächen haftet (engl.: pressure sensitive adhesives (PSA)). Haftklebstoffe dienen zum Herstellen selbstklebender Erzeugnisse wie Selbstklebeetiketten, -bänder oder -folien. Derartige Produkte lassen sich sehr einfach anwenden und ermöglichen ein schnelles Arbeiten beim Verkleben. Es sind im Gegensatz zu Kontaktklebemassen keine Ablüftzeiten erforderlich. Auch eine sog. "offene Zeit", innerhalb der die Verklebung ausgeführt werden muß, existiert nicht. Die Qualität eines selbstklebenden Artikels hängt im wesentlichen davon ab, ob die innere Festigkeit (Kohäsion) und die Haftung des Klebstoffilms auf der zu beklebenden Oberfläche (Adhäsion) entsprechend der Anwendung aufeinander abgestimmt sind.

Beispielsweise muß bei Haftklebstoffen für Etiketten die Kohäsion so groß sein, daß beim Stanzen und Schneiden kein Fadenziehen bzw. Kantenaustritt auftritt, da es sonst zu Verschmutzungen der Schneidewerkzeuge und Verklebung der Schnittflächen kommt. Gleichzeitig soll die Adhäsion auf einem hohen Niveau liegen, um eine gute Haftung auf dem zu beklebenden Substrat zu erreichen.

Adhäsion und Kohäsion sind im allgemeinen nicht unabhängig voneinander optimierbar. Gewünscht sind Maßnahmen, die entweder das Niveau beider Eigenschaften anheben oder zumindest eine Eigenschaft unverändert erhalten, während sich die jeweils andere verbessert.

Aus US-A-4939190 und EP 215241 sind Haftklebstoffe aus mehrstufig aufgebauten Polymerisaten bekannt. Diese zeigen jedoch noch nicht das gewünschte Adhäsions-, Kohäsionsniveau, bzw. Adhäsions-, Kohäsionsverhältnis.

Überraschenderweise wurde auch gefunden, daß bestimmte, erfindungsgemäß erhältliche Polymerisate ausgezeichnete Haftklebstoffe mit hoher Kohäsion und hoher Adhäsion sind. Diese Polymerisate sind unten näher definiert.

Zum erfindungsgemäßen Polymerisationsverfahren ähnliche Polymerisationsverfahren sind aus Polymer, 1985, Vol. 26, S. 1359 bis 1364, aus J. of Appl. Polymer Science, Vol. 56, S. 793 bis 802 (1995), aus EP-A 359 562, aus EP-A 522 789 sowie aus EP-A 187 505 bekannt. Nachteilig an diesen Verfahren ist jedoch, daß sie das erfindungsgemäß gewünschte mechanische Eigenschaftsprofil der resultierenden Polymerisatfilme entweder nicht in befriedigender Weise einzustellen vermögen und/oder in den nachfolgenden Polymerisationsstufen zwingend der Copolymerisation von mehrfach ethylenisch (nicht konjugiert) ungesättigten Monomeren bedürfen, die vergleichsweise teuer sind.

Ferner sind aus der Literatur zahlreiche wenigstens zweistufige Verfahren der radikalischen wäßrigen Emulsionspolymerisation bekannt (z.B. US-A 3 562 235 u. EP-A 600 478), bei denen die Zugabe der in den verschiedenen Polymerisationsstufen zu polymerisierenden Monomeren ins Polymerisationsgefäß nach Maßgabe ihres Verbrauchs und damit so erfolgt, daß bis zur Beendigung der Zugabe der Polymerisationsumsatz der in einer Stufe zu polymerisierenden und dem Polymerisationsgefäß bereits zugegebenen Monomeren während der meisten Zeit oberhalb von 80 mol-% liegt. Nachteilig an diesen Verfahren ist jedoch, daß sie in der Regel das erfindungsgemäß gewünschte mechanische Eigenschaftsprofil der resultierenden Polymerisatfilme nicht in befriedigender Weise einzustellen vermögen und/oder in ihrer Durchführung vergleichsweise kompliziert sind.

Wesentlich für das erfindungsgemäße Verfahren ist, daß Monomere, die in einer Stufe i polymerisiert werden, dem Polymerisationsgefäß so zugegeben werden, daß sich ein signifikanter Teil von ihnen vor ihrer Polymerisation in den bereits im Polymerisationsgefäß befindlichen, im wäßrigen Medium dispers verteilten, Polymerisatteilchen zu lösen vermag und somit in diesen dispergierten Polymerisatteilchen gelöst (d.h., nach Quellung der dispergierten Polymerisatpartikel) polymerisiert wird.

Vorzugsweise wird erfindungsgemäß daher so verfahren, daß in jeder Polymerisationsstufe i die Zugabe der in dieser Polymerisationsstufe i zu polymerisierenden Monomeren ins Polymerisationsgefäß so erfolgt, daß bis zur Beendigung der Zugabe der Polymerisationsumsatz $U^i$ von in der Stufe i zu polymerisierenden und dem Polymerisationsgefäß bereits zugegebenen Monomeren zu keinem Zeitpunkt 40 mol-% überschreitet. Besonders bevorzugt beträgt vorgenannter $U^i$ bis zur Beendigung der Zugabe ≤30 mol-% und ganz besonders bevorzugt ≤20 bzw. ≤10 mol-% oder ≤5 mol-%. Besonders günstig ist es, bei Zugabe der in einer Stufe i zu polymerisierenden Monomeren ins Polymerisationsgefäß die Polymerisation weitgehend zu unterbrechen, d.h., die Polymerisation der in der Stufe i zu polymerisierenden Monomeren erst nach Zugabe der Gesamtmenge der in der Stufe i zu polymerisierenden Monomeren ins Polymerisationsgefäß durchzuführen. Dabei kann die Gesamtmenge der in der Stufe i zu polymerisierenden Monomeren, wie stets im Rahmen des erfindungsgemäßen Verfahrens, entweder auf einmal oder kontinuierlich ins Polymerisationsgefäß gegeben werden. Wie bereits erwähnt, kann eine Unterbrechung der Polymerisation durch Maßnahmen wie Temperaturerniedrigung, Zusatz von Polymerisationsinhibitoren (Radikalfänger wie z.B. Hydrochinon), Initiatorverbrauch etc. bewirkt werden.

Die Quellung der bereits im Polymerisationsgefäß im wäßrigen Medium in disperser Verteilung befindlichen Polymerisatteilchen durch die in einer Polymerisationsstufe i zu polymerisierenden Monomeren wird in der Regel dadurch erleichtert, daß man diese Monomeren nicht in wäßrigem Medium voremulgiert, sondern in reiner Form zugibt. Ferner ist es normalerweise erfindungsgemäß von Vorteil, wenn die Zugabe bei im wesentlichen unterbrochener Polymerisation bei erhöhter Temperatur, z.B. 50 bis 95°C oder 60 bis 80°C, erfolgt. Solchermaßen erhöhte Temperaturen beschleunigen normalerweise den gewünschten Löse- bzw. Quellungsprozeß. Letzterer wird auch dadurch positiv beeinflußt, daß ausreichend Zeit zur Verfügung gestellt wird. D.h., bei Bedarf werden die in einer Polymerisationsstufe i zu polymerisierenden Monomeren dem Polymerisationsgefäß zugegeben und der Inhalt des Polymerisationsgefäßes, vorzugsweise unter Rühren, bei unterbrochener Polymerisation für längere Zeit (von mehreren Minuten über mehrere Stunden bis zu mehreren Tagen) bei vorzugsweise erhöhter Temperatur sich selbst überlassen. Eine solche Maßnahme ist insbesondere dann häufig förderlich, wenn das Polymerisat 1 Monomere einpolymerisiert enthält, die zwei nicht konjugierte ethylenisch ungesättigte Gruppen aufweisen. Letztere vernetzen die in einem Polymerisatteilchen enthaltenen Polymerisatketten, was die gewünschte Quellung erschwert.

Erfindungsgemäß ist es daher in der Regel günstig, wenn die Gesamtmenge der zur Herstellung des Polymerisats 1 polymerisierten Monomeren, abgesehen von Monomeren, die zwei konjugierte ethylenisch ungesättigte Gruppen aufweisen, nicht mehr als 2 Gew.-% an Monomeren umfaßt, die mehr als eine ethylenisch ungesättigte Gruppe aufweisen. Normalerweise ist es erfindungsgemäß von Vorteil, wenn das Polymerisat 1 überhaupt keine solche vernetzend wirkende Monomeren einpolymerisiert enthält.

Obwohl Monomere mit zwei konjugierten ethylenisch ungesättigten Gruppen, wie Butadien, im Rahmen einer radikalischen wäßrigen Emulsionspolymerisation normalerweise kaum eine ausgeprägte Vernetzung bedingen (die Reaktivität der zweiten ethylenisch ungesättigten Gruppe ist üblicherweise herabgesetzt), enthält das Polymerisat 1 erfindungsgemäß mit Vorteil keine Monomere mit zwei konjugierten ethylenisch ungesättigten Gruppen einpolymerisiert. Desgleichen gilt für die Polymerisationsstufen i.

Außerdem ist es bevorzugt, daß die in den Polymerisationsstufen i polymerisierten Monomere keine Monomere umfassen, die mehr als eine nicht-konjugierte, ethylenisch ungesättigte Gruppe aufweisen, d.h. diese Monomere umfassen vorzugsweise kein Vernetzungsmittel.

Bevorzugt schließt sich beim erfindungsgemäßen Verfahren an die Herstellung des Polymerisats 1 lediglich eine Polymerisationsstufe i an. Dabei kann ein Teil der in der einen Polymerisationsstufe i zu polymerisierenden Monomeren bereits im Rahmen der Herstellung des Polymerisats 1 ins Polymerisationsgefäß gegeben worden sein. Dies ist z.B. dann der Fall, wenn man die radikalische wäßrige Emulsionspolymerisation zur Herstellung des Polymerisats 1 gezielt abbricht, bevor die ins Polymerisationsgefäß gegebenen Monomeren vollständig einpolymerisiert worden sind. Die dabei verbliebenen Monomeren bilden dann einen Teil der nachfolgenden Polymerisationsstufe i (entsprechend kann auch bei mehreren Polymerisationsstufen i verfahren werden).

Der Begriff Glasübergangstemperatur meint in dieser Schrift die nach dem DSC-Verfahren (Differential Scanning Calorimetry, 20°C/min, midpoint) ermittelte Glasübergangstemperatur (vgl. ASTM D 3418-82).

Zweckmäßigerweise beträgt $Tg^1$ erfindungsgemäß häufig -60°C bis +110°C. D.h., Ausgestaltungen des erfindungsgemäßen Verfahrens sind z.B. solche mit $Tg^1$ von -50°C bis +50°C, oder mit $Tg^1$ von -50°C bis +20°C, oder mit $Tg^1$ von -50°C bis 0°C oder mit $Tg^1$ von -40°C bis -20°C.

Die $Tg^1$ von Polymerisaten, die als Haftklebstoffe brauchbar sind, liegt im allgemeinen im Bereich von -70 °C bis 20 °C, bevorzugt -60 °C bis 0 °C, insbesondere -55 °C bis -20 °C und besonders bevorzugt -50 °C bis -20 °C.

Bei vorgegebenem $Tg^i$ für die i-te Polymerisationsstufe läßt sich eine in der i-ten Polymerisationsstufe zu polymerisierende Monomerenzusammensetzung in einfacher Weise mittels der Gleichung nach Fox zusammenstellen. Nach Fox (T.G. Fox, Bull. Am. Phys. Soc. (Ser. II) 1, 123 (1956)) und Ullmanns Enzyklopädie der technischen Chemie (Verlag Chemie, Weinheim, 1980, Bd. 19, 4. Auflage, S. 18) gilt für den hochmolekularen Grenzwert der Glasübergangstemperatur von statistischen Mischpolymerisaten in guter Näherung

$$\frac{1}{Tg} = \frac{X^1}{Tg^1} + \frac{X^2}{Tg^2} + \dots\dots\dots \frac{X^n}{Tg^n},$$

wobei $X^1$, $X^2$, ....., $X^n$ die Massenbrüche der Monomeren 1, 2, ....., n und $Tg^1$, $Tg^2$, ....., $Tg^n$ die hochmolekularen Grenzwerte der Glasübergangstemperaturen der jeweils nur aus einem der Monomeren 1, 2, .........., oder n aufgebauten Polymerisate in Grad Kelvin bedeuten.

Die hochmolekularen Grenzwerte der Glasübergangstemperaturen für die Homopolymerisate der meisten Monomeren sind bekannt und z.B. in Ullmann's Encyclopedia of Industrial Chemistry, VCH Weinheim, 1992, fifth edition, Vol. A21, S. 169, aufgeführt. Weitere Quellen für Glasübergangstemperaturen von Homopolymerisaten sind z. B. J. Brandrup, E.H. Immergut, Polymer Handbook 1st Ed. J. Wiley, New York 1966, 2nd Ed. J. Wiley, New York 1975, und 3rd Ed. J. Wiley, New York 1989.

Experimentell läßt sich eine statistische Copolymerisation einer Monomerenzusammensetzung i einer Polymerisationsstufe i im wesentlichen dadurch realisieren, daß man ein ihr entsprechendes Monomerengemisch im Zulaufverfahren nach der Methode der radikalischen wäßrigen Emulsionspolymerisation polymerisiert. D.h., man emulgiert das Monomerengemisch in wäßriger Phase vor und läßt es nach Maßgabe des Verbrauchs dem Polymerisationsgefäß unter Zusatz von Initiatoren so zulaufen, daß der Polymerisationsumsatz der bereits im Polymerisationsgefäß befindlichen Monomeren stets ≥95 mol-% beträgt. Als Initiatoren eignet sich vorzugsweise Natriumperoxodisulfat und die Polymerisationstemperatur liegt normalerweise bei 60 bis 90°C. Als Dispergiermittel können die in dieser Schrift zur Herstellung der erfindungsgemäßen wäßrigen Polymerisatdispersionen empfohlenen Substanzen angewendet werden. Das Molekulargewicht läßt sich in an sich bekannter Weise durch Mitverwendung von das Molekulargewicht regelnden Substanzen (z.B. Mercaptanen) und/oder die verwendete Initiatormenge einstellen. In Abwesenheit von das Molekulargewicht regelnden Substanzen und Verwendung von 0,1 bis 2 Gew.-%, bezogen auf die Monomerenmenge, an Polymerisationsinitiator, läßt sich eine wäßrige Polymerisatdispersion erhalten, deren Glasübergangstemperatur dem hochmolekularen Grenz-$Tg^i$ entspricht.

Erfindungsgemäß muß für jedes $Tg^i$ die Differenz $Tg^i$-$Tg^1$ wenigstens 10°C betragen. D.h., Ausgestaltungen des erfindungsgemäßen Verfahren sind z.B. solche, in denen für jede Polymerisationsstufe i die Differenz $Tg^i$-$Tg^1$ 10°C bis 220°C, oder 30°C bis 200°C, oder 50°C bis 180°C, oder 80°C bis 150°C, oder 100°C bis 130°C beträgt.

Weist für alle Polymerisationsstufen i die Differenz $Tg^i$-$Tg^1$ einen vergleichsweise geringen Wert auf, so bedingt das erfindungsgemäße Verfahren insbesondere eine ausgeprägte Erhöhung der Reißdehnung. Weist die Differenz $Tg^i$-$Tg^1$ für alle Polymerisationsstufen i einen vergleichsweise hohen Wert auf, so bedingt das erfindungsgemäße Verfahren insbesondere eine ausgeprägte Erhöhung der Reißfestigkeit. Erfindungsgemäß günstig ist es, wenn die Differenzen $Tg^i$-$Tg^1$ 60 bis 190°C betragen. Für die Verwendung als Haftklebstoffe sind insbesondere $Tg^i$-$Tg^1$ von 60 bis 160°C vorteilhaft.

Das Vorgenannte trifft insbesondere dann zu, wenn sich beim erfindungsgemäßen Verfahren an die Herstellung des Polymerisats 1 lediglich eine Polymerisationsstufe i anschließt.

Der gewichtsmittlere Durchmesser $\bar{d}_w$ des in wäßrigem Medium in disperser Verteilung befindlichen Polymerisats 1 kann sich erfindungsgemäß über einen weiten Bereich erstrecken. Beispielsweise kann $\bar{d}_w$ 50 nm bis 2000 nm betragen. Häufig wird $\bar{d}_w$ 100 nm bis 1000 nm oder 200 nm bis 500 nm betragen.

In entsprechender Weise kann das zahlenmittlere Molekulargewicht $\bar{M}_n$ des Polymerisats 1 einen weiten Wertebereich überstreichen. Beispielsweise kann $\bar{M}_n$ 5000 bzw. 50000 bis $5 \cdot 10^6$ oder 100000 bis $3 \cdot 10^6$ oder 250000 bis $1 \cdot 10^6$ betragen. Selbstverständlich können zur Herstellung des Polymerisats 1 das Molekulargewicht regelnde Substanzen wie z.B. Mercaptane (Mercaptoethanol, tert.-Dodecylmercaptan u.s.w.) und/oder Halogenkohlenwasserstoffe (z.B. Methylenchlorid, Tetrachlorkohlenstoff, Chloroform, Bromoform, Dichlorethan, Trichlorethan), und/oder $C_1$- bis $C_4$-Alkohole wie Methanol und Allylalkohol mitverwendet werden. Desgleichen gilt für die Polymerisationsstufen i. Vorzugsweise werden sowohl das Polymerisat 1 als auch die Polymerisationsstufen i ohne Mitverwendung von das Molekulargewicht regelnden Substanzen erzeugt.

Erfindungsgemäß beträgt die Gesamtmenge der in allen Polymerisationsstufen i polymerisierten Monomeren, bezogen auf die Menge der im Verlauf des erfindungsgemäßen Verfahrens insgesamt polymerisierten Monomeren, 0,1 Gew.-% bis <15 Gew.-%, besonders bevorzugt 0,1 bis <10 Gew.-%. Zweckmäßig ist vielfach eine in entsprechender Weise bezogene Gesamtmenge von in allen Polymerisationsstufen i polymerisierten Monomeren von 0,5 Gew.-% bis 8 Gew.-% bzw. von 1 Gew.-% bis 6 Gew.-% oder von 2 Gew.-% bis 6 Gew.-%.

Zur Herstellung des Polymerisats 1 sowie zur Polymerisation in den Polymerisationsstufen i kommen erfindungsgemäß prinzipiell alle in an sich bekannter Weise radikalisch polymerisierbaren monoethylenisch ungesättigten Monomeren in Betracht. Dies sind Monomere wie Styrol, α-Methylstyrol, o-Chlorstyrol, α-Phenylstyrol oder Vinyltoluole, Ester aus Vinylalkohol und 1 bis 18 C-Atome aufweisenden Monocarbonsäure wie Vinylacetat, Vinylpropionat, Vinyl-n-butyrat, Vinyllaurat und Vinylstearat, Ester aus Allylalkohol und 1 bis 18 C-Atome aufweisenden Monocarbonsäuren wie Allylacetat, Allylpropionat, Allyl-n-butyrat, Allyllaurat und Allylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie Methylacrylat, Methylmethacrylat, Ethylacrylat, Ethylmethacrylat, n-Butylacrylat, n-Butylmethacrylat, iso-Butylacrylat, iso-Butylmethacrylat, tert.-Butylacrylat, tert.-Butylmethacrylat, Hexylacrylat, Hexylmethacrylat, n-Octylacrylat, n-Octylmethacrylat, 2-Ethylhexylacrylat, 2-Ethylhexylmethacrylat, Decylacrylat, Laurylacrylat, Stearylacrylat, iso-Bornylacrylat, iso-Bornylmethacrylat, Norbornylacrylat, 4-tert.-Butylcyclohexylacrylat, 4-tert.-Butylcyclohexylmethacrylat, 3,3,5-Trimethylcyclohexylacrylat, 3,3,5-Trimethylcyclohexylmethacrylat, Maleinsäuredimethylester oder Maleinsäure-n-butylester sowie Nitrile α,β-monoethylenisch ungesättigter Carbonsäuren wie Acrylnitril und Methacrylnitril. Geeignete $C_{4-8}$ konjugierte Diene sind z.B. 1,3-Butadien und Isopren. Von Bedeutung sind auch im Handel befindliche Monomere VEOVA® 9-11 (VEOVA X ist ein Handelsname der Firma Shell und steht für Vinylester [von Carbonsäuren, die auch als Versatic® X-Säuren bezeichnet werden] der allgemeinen Formel

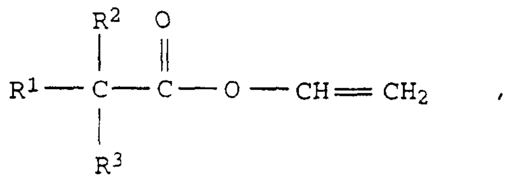

wobei $R^1$, $R^2$ und $R^3$ für Alkylreste stehen, deren Gesamtzahl an Kohlenstoffatomen ($R^1$+$R^2$+$R^3$) gleich X abzüglich 2 ist).

Aus den vorgenannten Monomeren rekrutieren sich in der Regel die Hauptanteile des Polymerisats 1 sowie der Polymerisationsstufen i. In der Regel vereint der Hauptanteil mehr als 75 Gew.-% des Polymerisats 1 bzw. der jeweiligen Polymerisationsstufe i auf sich. Monomere, die für sich polymerisiert üblicherweise Homopolymerisate ergeben, die eine erhöhte Wasserlöslichkeit aufweisen, sind sowohl im Polymerisat 1 als auch in den Polymerisationsstufen i im Normalfall lediglich in modifizierenden Mengen, normalerweise zu weniger als 25 Gew.-%, in der Regel 0,1 bis 10 Gew.-% bzw. 0,1 bis 5 Gew.-% enthalten.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure, Acrylamidopropansulfonsäure und wasserlösliche Salze der vorgenannten Säuren. Weitere Beispiele für derartige Monomere bilden Monoester aus zweiwertigen Alkoholen und 3 bis 6 C-Atome aufweisenden α,β-monoethylenisch ungesättigten Carbonsäuren wie Hydroxyethylacrylat, n-Hydroxypropylacrylat, n-Hydroxybutylacrylat sowie die entsprechenden Methacrylate. Üblicherweise bedingt eine Copolymerisation der vorgenannten Monomeren eine erhöhte Stabilität der dispersen Verteilung des resultierenden Polymerisats im wäßrigen Medium.

Vorzugsweise umfassen die Polymerisationsstufen i keine der vorgenannten Monomeren mit erhöhter Wasserlöslichkeit. Vielmehr sind die in den Polymerisationsstufen i zu polymerisierenden Monomeren mit Vorteil solche mit besonders geringer Wasserlöslichkeit. Im Regelfall werden in den Polymerisationsstufen i ausschließlich solche Monomere polymerisiert, deren molale Löslichkeit in Wasser (bei 1 atm u. 25°C) gleich oder geringer ist als die entsprechende Löslichkeit von Methylmethacrylat in Wasser.

Erfindungsgemäß kann das Polymerisat 1 auch zwei oder mehr nicht konjugierte ethylenisch ungesättigte Gruppen aufweisende Monomere wie z.B. die Di-Ester zweiwertiger Alkohole mit α,β-monoethylenisch ungesättigten Monocarbonsäuren einpolymerisiert enthalten. Bevorzugte zweifach ungesättigte Di-Ester sind diejenigen der Acrylsäure und der Methacrylsäure. Beispielhaft aufgeführt seien Alkylenglykoldiacrylate- und -dimethylacrylate wie Ethylenglykoldiacrylat, 1,3-Butylenglykoldiacrylat, 1,4-Butylenglykoldiacrylat, Propylenglykoldiacrylat, 1,6-Hexandioldiacrylat, Dipropylenglykoldiacrylat, Tripropylenglykoldiacrylat und Trimethylolpropantriacrylat. Als vernetzend wirkende Bestandteile des Polymerisats 1 kommen ferner Monomere wie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat in Betracht.

Vielfach ist es günstig, wenn das Polymerisat 1 und/oder eine oder mehrere der Polymerisationsstufen i in untergeordneten Mengen, in der Regel in Mengen von 0,5 bis 5 Gew.-%, solche Monomere aufweisen, die erst während der Filmbildung eine Vernetzung bedingen. Beispielhaft genannt seien Carbonylgruppen aufweisende Monomere wie Acrolein, Methacrolein, Diacetonacrylamid und -methacrylamid sowie Acetessigsäurevinylester. Vorgenannte Monomere bewirken z.B. dann eine Nachvernetzung, wenn die wäßrige Polymerisatdispersion gleichzeitig eine entsprechende Menge einer Polyaminverbindung zugesetzt enthält. Als solche eignen sich insbesondere die Dihydrazide von 2 bis 10 C-Atome aufweisenden aliphatischen Dicarbonsäuren. Beispiele hierfür sind Oxalsäuredihydrazid, Malonsäuredihydrazid, Bernsteinsäuredihydrazid, Glutarsäuredihydrazid, Adipinsäuredihydrazid oder Sebacinsäuredihydrazid.

Ein anderes Nachvernetzung bedingendes Monomer ist z.B. 2-Acetoacetoxyethylmethacrylat (alleine bzw. in Kombination mit Polyaminen oder Polyaldehyden wie Glyoxal). Des weiteren eignen sich zur Nachvernetzung solche Polymerisatbausteine, die hydrolysierbare Si-organische Bindungen aufweisen. Beispielhaft genannt seien die copolymerisierbaren Monomeren Methacryloxypropyltrimethoxysilan und Vinyltrimethoxysilan. Weitere geeignete Polymerbausteine entsprechender Art finden sich in der DE-A 43 41 260. Weisen die dispergierten Polymerisatpartikel Carboxylgruppen auf, läßt sich eine Nachvernetzung auch durch Zusatz von mehrwertige Kationen aufweisenden Metallsalzen bewirken (z.B. Mg-, Ca-, Zn- oder Zr-Salze). Auch eignen sich Epoxy- und/oder N-Alkylolgruppen aufweisende Monomere wie z.B. Glycidylacrylat, N-Methylolacrylamid und N-Methylolmethacrylamid zum Zweck der Nachvernetzung. Nachvernetzung läßt sich auch durch Copolymerisation von geringen Mengen an ungesättigten Benzophenon- oder Acetophenonderivaten und spätere Photoinitiierung erzielen. Alternativ können auch entsprechende gesättigte Benzophenon- oder Acetophenonderivate in die erfindungsgemäß erhältlichen wäßrigen Polymerisatdispersionen eingerührt werden.

Es sei an dieser Stelle jedoch festgehalten, daß es erfindungsgemäß keiner Mitverwendung von Nachvernetzung bedingenden Bestandteilen bedarf, um das erwünschte mechanische Eigenschaftsprofil der Dispersionspolymerisatfilme zu erzielen. Umfaßt das erfindungsgemäße Verfahren Nachvernetzung bewirkende Systeme, so sind mit den Glasübergangstempraturen $Tg^1$ und $Tg^i$ die unter Ausschluß dieser lediglich in untergeordneten Mengen enthaltenen Vernetzungsbestandteile zu ermittelnden Glasübergangstemperaturen gemeint.

Ferner können das Polymerisat 1 und/oder die Polymerisationsstufen i in untergeordneten Mengen, in der Regel 0,1 bis 5 Gew.-%, Haftmonomere (z.B. Stickstoff enthaltende) enthalten, um die Haftung des Films der resultierenden wäßrigen Polymerisatdispersion auf zahlreichen Materialien wie Holz, Metall, Mineralien, Papier, Textilien und Kunststoff, insbesondere aber auf alten Anstrichen auf der Basis trocknender Öle und/oder Alkydharze, zu erhöhen und die Empfindlichkeit der Haftung gegenüber der Einwirkung von Feuchtigkeit und Nässe zu mindern (erhöhte Naßhaftung).

Als Stickstoff enthaltende Haftmonomere kommen insbesondere radikalisch polymerisierbare Monomere mit wenigstens einer Amino-, Ureido- oder N-heterocyclischen Gruppen in Betracht. Eine Vielzahl solcher geeigneter Haftmonomeren findet man in der EP-B 421 185, in der EP-B 379 892 auf Seite 3, in der EP-A 609 756 auf Seite 2, in der DE-A 43 34 178 und in der DE-A 39 02 067 auf den Seiten 3/4.

Beispielhaft genannt seien Aminoethylacrylat und -methacrylat, Dimethylaminoethylacrylat und -methacrylat, Diethylaminoethylacrylat und -methacrylat, Dimethylaminopropylacrylat und -methacrylat, 3-Dimethylamino-2,2-dimethylpropyl-1-acrylat und -methacrylat, 2-N-Morpholinoethylacrylat und -methacrylat, 2-N-Piperidinoethylacrylat und -methacrylat, N-(3-Dimethylaminopropyl)acrylamid und -methacrylamid, N-Dimethylaminoethylacrylamid und -methacrylat, N-Diethylaminoethylacrylamid und -methacrylamid, N-(4-Morpholinomethyl)acrylamid und -methacrylamid, Vinylimidazol sowie monoethylenisch ungesättigte Derivate des Ethylenharnstoffs wie N-(2-Acryloyloxyethyl)-ethylenharnstoff, N-(β-Acrylamidoethyl)-ethylenharnstoff, N-2-(Allylcarbamato)aminoethylimidazolidinon, N-(3-allyloxy-2-hydroxypropyl)aminoethylethylenharnstoff, N-Vinylethylenharnstoff, N-Vinyloxyethylenharnstoff, N-Methacryloxyacetoxyethylethylenharnstoff, N-(Acrylamidoethylen)ethylenharnstoff, N-(Methacrylamidoethylen)ethylenharnstoff, 1-(2-Methacryloyloxyethyl)imidazolin-2-on und N-(Methacrylamidoethyl)ethylenharnstoff. Weitere geeignete Ureidmonomere sind in einem Übersichtsartikel von R.W. Kreis, A.M. Sherman, Developments in "Ureido Functional Monomer for Promoting Wet Adhesion in Latex Paints, Water-Borne and Higher Solids Coating Symposium vom 03. bis 05.02.1988, New Orleans, Lousiana" genannt.

Das erfindungsgemäße Verfahren wird begünstigt, wenn die Monomeren, die das Polymerisat 1 aufbauen, und die Monomeren, die in den Polymerisationsstufen i polymerisiert werden, einander chemisch ähnlich sind. D.h., wird das Polymerisat 1 überwiegend aus Alkylestern der Acryl- und Methacrylsäure oder aus deren Gemisch mit Styrol und/oder Arylnitril aufgebaut, ist es von Vorteil, wenn auch in den Polymerisationsstufen i überwiegend Alkylester der Acryl- und Methacrylsäure entweder für sich oder im Gemisch mit Styrol und/oder Acrylnitril einpolymerisiert werden. Wird das Polymerisat 1 hingegen überwiegend aus Vinylestern oder deren Gemisch mit Ethylen polymerisiert, ist es von Vorteil, wenn auch in den Polymerisationsstufen i überwiegend Vinylester oder deren Gemisch mit Ethylen polymerisiert werden. Besteht das Polymerisat 1 vorwiegend aus Butadien oder aus dessen Gemisch mit Acrylnitril und/ oder Styrol, ist günstig, wenn Acrylnitril und/ oder Styrol auch die Hauptbestandteile der Polymerisationsstufen i bilden. D.h., das Polymerisat 1 kann bei erfindungsgemäßer Verfahrensweise zu wenigstens 75 Gew.-% nur aus Estern der Acryl- und/oder Methacrylsäure mit $C_1$- bis $C_8$-Alkanolen oder zu wenigstens 75 Gew.-% aus deren Gemisch mit Styrol und/oder Acrylnitril aufgebaut sein. Aber auch ein Aufbau aus wenigstens 75 Gew.-% Vinylestern und/oder Ethylen ist denkbar.

Dementsprechend ist das erfindungsgemäße Verfahren anwendbar bei Polymerisaten 1, die in radikalisch polymerisierter Form zu 90 (vorzugsweise zu 95) bis 100 Gew.-% aus Estern der Acryl- und/oder Methacrylsäure mit

$C_1$- bis $C_8$-Alkanolen und zu 0 bis 10 (vorzugsweise bis 5) Gew.-% aus 3 bis 6 C-Atome aufweisenden α,β-monoethylenisch ungesättigten Carbonsäuren, deren Amiden und/oder Alkalimetallsalzen aufgebaut sind.

Es ist aber auch anwendbar bei Polymerisaten 1, die in radikalisch polymerisierter Form zu 95 bis 100 Gew.-% aus Estern der Acryl- und/oder Methacrylsäure mit $C_1$-$C_8$-Alkanolen und Styrol und zu 0 bis 5 Gew.-% aus 3 bis 6 C-Atome aufweisenden α,β-monoethylenisch ungesättigten Carbonsäuren, deren Amiden und/oder Alkalimetallsalzen aufgebaut sind.

Bevorzugt rekrutieren sich für den Aufbau des Polymerisats 1 dessen Monomere aus der Gruppe umfassend Ethylacrylat, Methylmethacrylat, n-Butylacrylat, 2-Ethylhexylacrylat, n-Butylmethacrylat, Acrylsäure, Methacrylsäure, Acrylamid, Methacrylamid, Itaconsäure, Styrol, Acrylnitril, Acrylamidopropansulfonsäure und Vinylsulfonsäure; besonders bevorzugt aus der Gruppe umfassend n-Butylacrylat, Methylmethacrylat, 2-Ethylhexylacrylat, n-Butylmethacrylat, Acrylsäure, Methacrylsäure, Acrylamid, Methacrylamid und Itaconsäure.

In allen vorgenannten Fällen bilden iso-Butylmethacrylat, n-Butylmethacrylat, tert.-Butylmethacrylat, iso-Bornylacrylat, iso-Bornylmethacrylat, 4-tert.-Butylcyclohexylacrylat, 4-tert.-Butylcyclohexylmethacrylat, 3,3,5-Trimethylcyclohexylacrylat, 3,3,5-Trimethylcyclohexylmethacrylat, Acrylnitril, Styrol, α-Phenylstyrol, α-Methylstyrol, Methylmethacrylat und Gemische der vorgenannten Monomeren, die in den Polymerisationsstufen i vorzugsweise zu polymerisierenden Monomeren. Diese Aussage trifft auch für den Fall sonstiger Polymerisate 1 zu.

Zur Herstellung von Polymerisatdispersionen, die als Haftklebstoffe brauchbar sind, verwendet man für das Polymerisat 1 vorzugsweise mindestens ein Monomer, dessen Homopolymerisat eine Tg < 0 °C besitzt und ausgewählt ist unter Estern der Acrylsäure und Methacrylsäure mit einem Alkonol mit mindestens 4 Kohlenstoffatomen, insbesondere n-Butylacrylat, iso-Butylacrylat, Hexylacrylat, n-Octylacrylat, 2-Ethylhexylacrylat, 2-Ethylhexylmethacrylat, Decylacrylat, Laurylacrylat, Stearylacrylat, iso-Bornylacrylat und anderen Monomeren mit Tg der Homopolymerisate <0°C. Besonders bevorzugt sind n-Butylacrylat und/oder 2-Ethylhexylacrylat. Diese Monomere bilden den Hauptanteil, d. h. sie werden im allgemeinen in Mengen von 70 bis 100 Gew.-%, insbesondere 80 bis 100 Gew.-% , bezogen auf das Gesamtgewicht der für die Herstellung des Polymerisats 1 verwendeten Monomere, eingesetzt. Das Polymerisat 1 kann somit bis zu 30 Gew.-%, insbesondere bis zu 20 Gew.-%, aus Comonomeren aufgebaut sein, die eine Tag > 0 °C aufweisen. Diese sind vorzugsweise ausgewählt unter Styrol, α-Methylstyrol, o-Chlorstyrol, α-Phenylstyrol, Vinylsulfonsäure, Acrylamidopropansulfonsäure, Acrylnitril, Methacrylnitril, Acrylsäure, Methacrylsäure, Acrylamid, Methylacrylat, Methylmethacrylat, Ethylacrylat, tert.-Butylacrylat, tert.-Butylmethacrylat, Vinylacetat, Vinylpropionat, Hydroxyethylacrylat, Hydroxypropylacrylat, n-Butylmethacrylat und Methacrylamid, wobei (Meth)acrylsäure und deren Amide besonders bevorzugt sind. Für die in den Stufen i polymerisierten Monomere gilt das oben gesagte, d.h. sie unterliegen keinen speziellen Beschränkungen.

Die Herstellung des Polymerisats 1 erfolgt erfindungsgemäß nach der Methode der radikalischen wäßrigen Emulsionspolymerisation, d.h., im Beisein von Dispergiermittel und radikalischem Polymerisationsinitiator unmittelbar im wäßrigen Medium in disperser Verteilung.

Als Dispergiermittel kommen sowohl die zur Durchführung von radikalischen wäßrigen Emulsionspolymerisaten üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 2000, vorzugsweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, Alkylrest: $C_4$ bis $C_{12}$), ethoxylierte Fettalkohole (EO-Grad: 3 bis 100, vorzugsweise 6 bis 50, Alkylrest: $C_6$ bis $C_{20}$), sowie Alkali- und Ammoniumsalze von Alkylsulfaten (Alkylrest: $C_8$ bis $C_{18}$), von Schwefelsäurehalbestern ethoxylierter Alkanole (EO-Grad: 1 bis 70, insbesondere 2 bis 10, Alkylrest: $C_{10}$ bis $C_{18}$) und ethoxylierter Alkylphenole (EO-Grad: 3 bis 100, vorzugsweise 6 bis 50, Alkylrest: $C_4$ bis $C_{18}$), von Alkylsulfonsäuren (Alkylrest: $C_{10}$ bis $C_{18}$) und von Alkylarylsulfonsäuren (Alkylrest: $C_9$ bis $C_{18}$). Weitere geeignete Emulgatoren wie Sulfobernsteinsäureester finden sich in Houben-Weyl, Methoden der organischen Chemie, Band XIV/1, Makromolekulare Stoffe, Georg-Thieme-Verlag, Stuttgart, 1961, Seite 192 bis 208.

Als geeignete grenzflächenaktive Substanzen haben sich ferner Verbindungen der allgemeinen Formel I

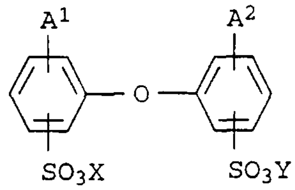

(I),

worin $A^1$ und $A^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $A^1$ und $A^2$ bevorzugt lineare oder verzweigte Alkylreste mit 6 bis 18 C-Atomen oder Wasserstoff, und insbesondere mit 6, 12 und 16 C-Atomen, wobei $A^1$ und $A^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I, in denen X und Y Natrium, $A^1$ ein verzweigter Alkylrest mit 12 C-Atomen und $A^2$ Wasserstoff oder $A^1$ ist. Häufig werden technische Gemische verwendet, die einen Anteil von 50 bis 20 Gew.-% des monoalkylierten Produktes aufweisen, beispielsweise Dowfax® 2A1 (Warenzeichen der DOW Chemical Company). Häufig werden die Verbindungen I für sich oder im Gemisch mit ethoxylierten Fettalkoholen (EO-Grad: 3 bis 50, Alkylrest: $C_8$ bis $C_{36}$) als Dispergiermittel eingesetzt. Die Verbindungen I sind allgemein bekannt, z.B. aus der US-A 4,269,749, und im Handel erhältlich. In der Regel beträgt die Menge an eingesetztem Dispergiermittel 0,5 bis 6, vorzugsweise 1 bis 5 und besonders bevorzugt 2 bis 4 Gew.-%, bezogen auf die zur Erzeugung des Polymerisats 1 radikalisch zu polymerisierenden Monomeren.

Die Auslösung der radikalischen Polymerisation zur Herstellung des Polymerisats 1 kann prinzipiell durch alle radikalischen Initiatoren erfolgen, die in der Lage sind, eine radikalische wäßrige Emulsionspolymerisation auszulösen. Es kann sich dabei sowohl um Peroxide, z.B. um $H_2O_2$, Peroxodischwefelsäure und/oder deren Salze, z.B. Alkalimetall- bzw. Ammoniumperoxodisulfat, als auch um Azoverbindungen wie Azo-bis-isobutyronitril oder 4,4'-Azo-bis-cyanvaleriansäure handeln.

Eine Initiierung der radikalischen wäßrigen Emulsionspolymerisation zur Herstellung des Polymerisats 1 bei vergleichsweise niedrigen Temperaturen ermöglichen kombinierte Initiatorsysteme, die aus wenigstens einem organischen und/oder anorganischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Insbesondere gilt das Vorgenannte für kombinierte Systeme, die zusätzlich eine geringe Menge einer im Polymerisationsmedium löslichen Metallverbindung, deren metallische Komponente in mehreren Wertigkeitsstufen auftreten kann, enthalten (vielfach in komplexierter Form, um Fällung zu verhindern), z.B. Ascorbinsäure/Eisen(II)sulfat/Wasserstoffperoxid, wobei anstelle von Ascorbinsäure auch z.B. das Natriummetallsalz der Hydroxymethansulfinsäure, Natriumsulfit oder Natriumhydrogensulfit und anstelle von Wasserstoffperoxid auch z.B. Alkalimetallperoxodisulfat und/oder Ammoniumperoxodisulfat angewendet werden können. Anstelle eines wasserlöslichen Eisen(II)-salzes kann auch ein V-Salz oder eine Kombination aus wasserlöslichen Fe/V-Salzen benutzt werden. In der Regel beträgt die zur Herstellung des Polymerisats 1 eingesetzte Menge an radikalischem Initiatorsystem, bezogen auf die Menge der zu polymerisierenden Monomeren, 0,1 bis 2 Gew.-%.

Polymerisationsdruck und Polymerisationstemperatur sind im Rahmen der Herstellung des Polymerisats 1 von eher untergeordneter Bedeutung. Im allgemeinen arbeitet man bei Temperaturen von 0°C bis 100°C, häufig 20°C bis 100°C, oder 50 bis 95°C, meist 60 bis 90°C. Um besonders langkettige Polymerisate 1 zu erhalten, wird man zweckmäßigerweise bei Temperaturen von 40 bis 70°C polymerisieren. Die Anwendung von vermindertem oder erhöhtem Druck ist möglich, so daß die Polymerisationstemperatur auch 100°C überschreiten und bis zu 130°C und mehr betragen kann. Vorzugsweise werden leichtflüchtige Monomere wie Ethylen oder Butadien unter erhöhtem Druck polymerisiert. Zur Regulierung des pH-Wertes des Polymerisationsmediums können während der radikalischen wäßrigen Emulsionspolymerisation zur Herstellung des Polymerisats 1 pH Puffer wie $NaHCO_3$, $Na_2CO_3$, Na-Acetat oder $Na_2P_2O_5$ zugesetzt werden.

Zur Verbesserung der Reproduzierbarkeit und Einstellung definierter Teilchendurchmesser können im Rahmen der Herstellung des Polymerisats 1 Polymerisatteilchenbildungsphase und Polymerisatteilchenwachstumsphase in dem Fachmann an sich bekannter Weise dadurch voneinander entkoppelt werden, daß man eine definierte Menge einer vorgebildeten wäßrigen Polymerisatdispersion (einen Saatlatex) ins Polymerisationsgefäß vorlegt oder in diesem eine solche in situ vorbildet. Die im weiteren Verlauf der radikalischen wäßrigen Emulsionspolymerisation zugesetzte Menge an Dispergiermittel wird dann in der Regel so bemessen, daß die kritische Micellbildungskonzentration nicht mehr überschritten und so eine Polymerisatteilchenneubildung weitgehend vermieden wird. Wird eine breite Verteilung der Durchmesser der Polymerisatteilchen des Polymerisats 1 angestrebt, wird man in der Regel dem Polymerisationsgefäß in an sich bekannter Weise während der radikalischen wäßrigen Emulsionspolymerisation Saatlatex zufügen. Wie die Verfahren der radikalischen Polymerisation generell, ist sowohl die radikalische wäßrige Emulsionspolymerisation zur Herstellung des Polymerisats 1 als auch jede Polymerisationsstufe i unter Inertgasatmosphäre (z.B. $N_2$, Ar)

oder unter Sauerstoff enthaltender (z.B. Luft) Atmosphäre durchführbar.

In besonders einfacher Weise läßt sich die radikalische wäßrige Emulsionspolymerisation zur Herstellung einer wäßrigen Dispersion eines Polymerisats 1 wie folgt durchführen.

Die zu polymerisierenden Monomeren werden in wäßrigem Medium emulgiert und der radikalische Polymerisationsinitiator wird in Wasser gelöst. Im Polymerisationsgefäß wird Wasser und gegebenenfalls eine geringe Menge an α, β-monoethylenisch ungesättigter Carbonsäure vorgelegt und auf die Polymerisationstemperatur erwärmt. Dann werden ein Teil der wäßrigen Monomerenemulsion und ein Teil der wäßrigen Initiatorlösung der Vorlage auf einmal zugefügt und polymerisiert. Danach werden dem Polymerisationsgefäß unter Aufrechterhaltung der Polymerisation die Restmenge der wäßrigen Monomerenemulsion und die Restmenge der wäßrigen Initiatorlösung, vorzugsweise im wesentlichen synchron, kontinuierlich zugeführt. Nach beendeter Initiator- und Monomerenzufuhr wird man das Polymerisationsgemisch unter Aufrechterhaltung der Polymerisationstemperatur zweckmäßigerweise noch einige Zeit unter Rühren sich selbst überlassen. Zur Durchführung der anschließenden Polymerisationsstufen i wird man das Reaktionsgemisch anschließend zweckmäßigerweise zunächst abkühlen. Dann wird man die in der Stufe i zu polymerisierenden Monomeren dem Polymerisationsgefäß, vorzugsweise für sich und auf einmal, zugeben. Mit Vorteil wird der Emulgatorgehalt der wäßrigen Dispersion des Polymerisats 1 dabei so beschaffen sein, daß das wäßrige Dispergiermedium im wesentlichen keine Emulgatormicellen aufweist. Dann wird man den mit Vorteil gekühlten Reaktorinhalt zweckmäßigerweise unter Rühren in der Regel einige Zeit sich selbst überlassen, um die Quellung zu begünstigen. Danach wird man normalerweise frischen radikalischen Polymerisationsinitiator zugeben und anschließend auf die Polymerisationstemperatur erwärmen und wie gewünscht polymerisieren. In entsprechender Weise können bei Bedarf weitere Polymerisationsstufen i angeschlossen werden.

Als radikalische Polymerisationsinitiatoren kann man für die Initiierung der Polymerisationsstufen i prinzipiell alle diejenigen einsetzen, die bereits im Rahmen der Herstellung der Dispersion des Polymerisats 1 genannt worden sind. Bevorzugt werden jedoch solche radikalischen Initiatorsystem eingesetzt, die organische Peroxide oder organische Hydroperoxide umfassen. Insbesondere solche organischen Peroxide und/oder Hydroperoxide umfassende Redoxinitiatorsystemen. Vor allem tert.-Butylhydroperoxid sowie Cumolhydroperoxid umfassende radikalische Initiatorsysteme sind geeignet. Aber auch Pinanhydroperoxid, p-Mentanhydroperoxid, Diisopropylphenylhydroperoxid, Dibenzoylperoxid, Dilaurylperoxid und Diacetylperoxid umfassende radikalische Initiatorsysteme sind geeignet. Als reduzierend wirkende Partner kommen dabei beispielsweise Alkalimetallsulfite, Ascorbinsäure, Acetonbisulfit sowie die Alkalimetallsalze der Hydroxymethansulfinsäure in Betracht. Bezogen auf die in einer Polymerisationsstufe i zu polymerisierenden Monomeren wird man in der Regel 0,1 bis 2 Gew.-% an radikalischem Polymerisationsinitiator zusetzen. Selbstverständlich können die in einer Polymerisationsstufe i zu polymerisierenden Monomeren in einer weniger bevorzugten Ausführungsform der vorliegenden Erfindung auch in in wäßrigem Medium voremulgierter Weise dem Polymerisationsgefäß zugegeben werden. Als Dispergiermittel können diesbezüglich alle diejenigen verwendet werden, die bereits zur Herstellung der wäßrigen Dispersion des Polymerisats 1 empfohlen wurden. Infolge der bevorzugten Verwendung von organischen Redoxinitiatorsystemen in den Polymerisationsstufen i wird die zugehörige Polymerisationstemperatur im Normalfall unterhalb von 80°C (meist ≥40°C bis ≤80°C) liegen. Hinsichtlich des Polymerisationsdrucks gilt das bezüglich der Herstellung des Polymerisats 1 Gesagte.

Die Filme der erfindungsgemäß resultierenden wäßrigen Polymerisatdispersionen (pigmentiert und/oder gefüllt oder nicht pigmentiert und nicht gefüllt) weisen neben den bereits beschriebenen Vorteilen auch eine gute Flexibilität, eine reduzierte Oberflächenklebrigkeit sowie eine befriedigende Härte auf. Sie eignen sich u.a. als Bindemittel für Beschichtungen von Leder sowie von hydrophoben Substraten, wie z.B. von mit Massen auf Polyurethanbasis, z. B. aus Gründen der Wärmeisolierung, beschichteten Flachdächern. Durch in an sich bekannter Weise durchzuführende Sprühtrocknung können aus den erfindungsgemäß erhältlichen wäßrigen Polymerisatdispersionen in wäßrigem Medium redispergierbare Polymerisatpulver hergestellt werden. In diese Trockenform gebracht lassen sich die erfindungsgemäß erhältlichen wäßrigen Polymerisatdispersionen kostengünstig transportieren, um am Gebrauchsort in die wäßrige Dispersion rückgeführt zu werden. Auch können die so erhältlichen Polymerisatpulver zur Herstellung von verkaufsgerechten Trockenputzen sowie zur Herstellung von mit Polymerisaten modifizierten mineralischen Bindebaustoffen wie Trockenmörtel, insbesondere solchen auf Zementbasis, verwendet werden. Auch eignen sich die erfindungsgemäß erhältlichen Polymerisatsysteme als Klebstoffe, als Bindemittel für Papierstreichmassen sowie als Bindemittel für Vliesstoffe. Insbesondere eignen sie sich, wie bereits erwähnt, für rißüberbrückende Beschichtungsmassen (z.B. Anstrichfarben).

Solche Beschichtungsmassen enthalten in der Regel 40 bis 95 Gew.-%, vorzugsweise 60 bis 90 Gew.-% und insbesondere 65 bis 85 Gew.-% nicht flüchtige Bestandteile. Bezogen auf deren Gesamtmenge entfallen etwa 10 bis 99,5 Gew.-%, vorzugsweise 10 bis 50 Gew.-% und insbesondere 20 bis 40 Gew.-% auf die im polymeren Bindemittel enthaltenen Feststoffanteile, 0 bis 60 Gew.-%, vorzugsweise 20 bis 60 Gew.-%, insbesondere 30 bis 55 Gew.-% auf Füllstoffe, 0 bis 60 Gew.-%, vorzugsweise 0 bis 20 Gew.-%, auf Pigmente und 0,5 bis 25 Gew.-%, vorzugsweise 1 bis 10 Gew.-%, auf Hilfsmittel.

Geeignete Füllstoffe sind beispielsweise Alumosilikate, Silikate, Erdalkalicarbonate, vorzugsweise Calciumcarbonat in Form von Calcit oder Kreide, Dolomit sowie Aluminiumsilikate oder Magnesiumsilikate wie Talk.

Ein typisches Pigment ist beispielsweise Titandioxid, vorzugsweise in der Rutilform. Die Beschichtungsmassen können jedoch, insbesondere wenn sie zu dekorativen Zwecken verwendet werden, auch farbige Pigmente, beispielsweise Eisenoxide enthalten.

Zu den üblichen Hilfsmitteln zählen Netzmittel, wie Natrium- oder Kaliumpolyphosphate, Polyacrylsäuren, deren Alkalisalze, Polyvinylalkohole etc. Darüber hinaus enthalten diese Beschichtungsmassen in der Regel Stoffe, die die Viskosität modifizieren, beispielsweise Celluloseether, wie Hydroxyethylcellulose. Weiterhin können den Beschichtungsmassen Dispergiermittel, Entschäumer, Konservierungs- oder Hydrophobiermittel, Biozide, Farbstoffe, Fasern oder weitere Bestandteile zugesetzt werden. Auch können die Beschichtungsmassen zur Einstellung der Filmbildeeigenschaften der Bindemittelpolymerisate Weichmacher enthalten.

Selbstverständlich kann das in den erfindungsgemäß erhältlichen wäßrigen Polymerisatdispersionen enthaltene Polymerisat auch durch in an sich bekannter Weise durchzuführende Koagulation isoliert und z.B. zum Modifizieren von technischen Kunststoffen verwendet werden.

Auch können die erfindungsgemäß erhältlichen wäßrigen Polymerisatdispersionen zum Modifizieren anderer wäßriger Polymerisatdispersionen eingesetzt werden. Dies kann in einfachster Weise so erfolgen, daß man sie den anderen wäßrigen Polymerisatdispersionen zusetzt. Es kann aber auch so erfolgen, daß man sie als Saatdispersion zur Herstellung einer anderen wäßrigen Polymerisatdispersion verwendet.

Weiterhin können die erfindungsgemäßen Polymerisate als Klebstoffe, insbesondere Haftklebstoffe verwendet werden. Insbesondere eignen sie sich als Haftklebstoffe.

Die Polymerisate werden zu diesem Zweck vorzugsweise in Form ihrer wäßrigen Dispersion verwendet.

Bei der Verwendung als Haftklebstoff kann den Polymerisaten bzw. den wäßrigen Dispersionen der Polymerisate ein Tackifier, d.h. ein klebrigmachendes Harz, zugesetzt werden. Tackifier sind z.B. aus Adhesive Age, Juli 1987, Seite 19-23 oder Polym. Mater. Sci. Eng. 61 (1989), Seite 588-592 bekannt.

Tackifier sind z.B. Naturharze, wie Kolophoniumharze und deren durch Disproportionierung oder Isomerisierung, Polymerisation, Dimerisation, Hydrierung entstehende Derivate. Diese können in ihrer Salzform (mit z.B. ein- oder mehrwertigen Gegenionen (Kationen)) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol oder Pentaerythrit.

Desweiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, $\alpha$-Methylstyrol oder Vinyltoluol, als Tackifier Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht $M_w$ unter 30 000. Die Polyacrylate bestehen bevorzugt zu mindestens 60, insbesondere mindestens 80 Gew.-% aus $C_1$-$C_8$ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäßen Polymerisaten, bevorzugt den wäßrigen Dispersionen der Polymerisate zugesetzt werden. Vorzugsweise liegen die Tackifier dabei selber in Form einer wäßrigen Dispersion vor.

Die Gewichtsmenge der Tackifier beträgt vorzugsweise 5 bis 100 Gew.-Teile, besonders bevorzugt 10 bis 50 Gew.-Teile, bezogen auf 100 Gew.-Teile Polymerisat (fest/fest).

Neben Tackifiern können noch Additive z.B. Verdickungsmittel, Entschäumer, Weichmacher, Pigmente, Netzmittel oder Füllstoffe, bei der Verwendung der Polymerisate als Klebstoff bzw. Haftklebstoff Verwendung finden.

Bei der Verwendung als Klebstoff bzw. Haftklebstoff können die erfindungsgemäßen Polymerisate bzw. wäßrigen Dispersionen oder wäßrigen Zubereitungen durch übliche Methoden, z.B. durch Rollen, Rakeln, Streichen etc. auf Substrate, z.B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Das Wasser kann bevorzugt durch Trocknung bei 50 bis 150°C entfernt werden. Zur späteren Verwendung kann die mit Klebstoff bzw. Haftklebstoff beschichtete Seite der Substrate, z.B. der Etiketten, mit einem Releasepapier, z.B. mit einem silikonisierten Papier, abgedeckt werden.

Die erfindungsgemäßen Polymerisate zeigen bei der Verwendung als Klebstoffe eine verbesserte Kohäsion bei im wesentlichen unveränderter Adhäsion und Klebrigkeit.

Beispiele Bi und Vergleichsbeispiele VB:

Nachfolgend werden die folgenden Abkürzungen verwendet:

| | |
|---|---|
| MMA = | Methylmethacrylat |
| nBA = | n-Butylacrylat |

EHA = 2-Ethylhexylacrylat
tBMA = tert.-Butylmethacrylat
iBMA = iso-Butylmethacrylat
nBMA = n-Butylmethacrylat
S = Styrol
alMS = α-Methylstyrol
BDA2 = Butandioldiacrylat
AA = Acrylsäure
MAA = Methacrylsäure
IA = Itaconsäure
AM = Acrylamid
NaPS = Natriumperoxodisulfat
tBHP = tert.-Butylhydroperoxid
RC = Natriumsalz der Hydroxymethansulfinsäure (Rongalit® C)
E1 = Ethoxyliertes Alkanol (Alkylrest: $C_{16-18}$; EO-Grad: 18)
E2 = Natriumsalz der Dodecylphenoxybenzyldisulfonsäure (Dowfax 2A1 entsprechender Wirkstoff)
DS = Dissolvine E-Fe-13®, Eisennatriumkomplex der EDTA
AcBS = Acetonbisulfit
RF = Reißfestigkeit oder Reißkraft [N/mm$^2$]
RD = Reißdehnung [%, bezogen auf Ausgangslänge]
RA = Brucharbeit = RF x RD [% x N/mm$^2$]

In allen Beispielen und Vergleichsbeispielen lag der Gehalt der resultierenden wäßrigen Polymerisatdispersion an nicht polymerisierten Monomeren (bestimmt mittels Gaschromatographie) bei <2000 ppm (bezogen auf das Gewicht der wäßrigen Polymerisatdispersion). D.h., der Restmonomerengehalt der Polymerisatdispersionen war in allen Fällen im wesentlichen ohne Einfluß auf die mechanischen Eigenschaften der zugehörigen Polymerisatfilme.

VB1: Aus 268 g Wasser, 14,22 g einer 45 gew.-%igen wäßrigen Lösung von E2, 160 g EHA, 520 g nBA, 120 g MMA und 16 g MAA wurde eine wäßrige Monomerenemulsion erzeugt. Aus 2,4 g Natriumperoxodisulfat (die Alkalimetallperoxodisulfate werden bevorzugt zur Herstellung der Polymerisate 1 eingesetzt) und 75 g Wasser wurde eine wäßrige Initiatorlösung erzeugt. In einem gerührten Polymerisationsgefäß (2 1) aus Glas wurden 250 g Wasser und 3,2 g Itaconsäure vorgelegt. Nach Spülen der Vorlage und des Polymerisationsgefäßes mit Stickstoff wurde die Vorlage auf 85°C erwärmt. Anschließend wurden dem Polymerisationsgefäß auf einmal zunächst 54,5 g der wäßrigen Monomerenemulsion und danach 7,7 g der wäßrigen Initiatorlösung zugefügt. Unter Aufrechterhaltung der 85°C wurde der Reaktorinhalt für 30 min unter Polymerisation sich selbst überlassen. Anschließend wurden unter Beibehalt der 85°C (zeitgleich beginnend) die Restmenge der wäßrigen Monomerenemulsion (innerhalb von 3 h) und die Restmenge der wäßrigen Initiatorlösung (innerhalb von 3,5 h) dem Polymerisationsgefäß kontinuierlich zugeführt. Danach wurde das Polymerisationsgemisch noch 1 h bei 85°C gerührt. Anschließend wurden zur Verringerung des Restmonomerengehaltes nacheinander 1,6 g einer 50 gew.-%igen wäßrigen tBHP Lösung und 0,64 g RC ins Polymerisationsgefäß gegeben und das Reaktionsgemisch auf 25°C abgekühlt. Danach wurde mittels einer 10 gew.-%igen wäßrigen NaOH-Lösung der pH-Wert des wäßrigen Dispergiermediums auf einen Wert von 9 eingestellt. Die resultierende wäßrige Polymerisatdispersion VB1 wies einen Feststoffgehalt von 56,2 Gew.-% und einen mittels Photonenkorrelationsspektroskopie (quasielastische Lichtstreuung) bestimmten mittleren Polymerisatteilchendurchmesser von 260 nm auf.
Das dispergierte Polymerisat wies folgende Zusammensetzung auf:

63,5 Gew.-% nBA
19,5 Gew.-% EHA
14,65 Gew.-% MMA
1,95 Gew.-% MAA
0,40 Gew.-% IA.

Zur Bestimmung der mechanischen Eigenschaften des Films der wäßrigen Polymerisatdispersion (in allen nachfolgenden Beispielen wurde entsprechend vorgegangen) wurde diese auf einen Feststoffgehalt von 25 Gew.-% verdünnt. Anschließend wurde eine Probe der so verdünnten wäßrigen Polymerisatdispersion in einer 15 cm x 15 cm x 0,6 cm Form aus Silicon während 2 Wochen bei 23°C und 50 % relativer Luftfeuchtigkeit getrocknet.

Die Probenmenge wurde so bemessen, daß die resultierende Filmdicke etwa 0,1 cm betrug. Die Bestimmung von RF, RD und damit von RA erfolgte in Anlehnung an die DIN 53 455 und die DIN 53 504. Die angegebenen Meßwerte sind Mittelwerte aus 5 Messungen an 5 Prüfkörpern. Dazu wurden nach der Ablösung des Films aus der Siliconform aus selbigem die zur Durchführung des Zugversuchs benötigten Probekörper ausgestanzt. Als Probenkörperformat wurde das in DIN 53 504 (s. 2.4.11.6) als Normstab S2 beschriebene Hantelformat angewendet. Die Dicke der Proben wurde mit dem Dickemeßgerät nach DIN 53 370 mit kreisförmiger Tastenform von 10 mm Durchmesser überprüft. Die Probekörper wurden in die Klammern einer Zugprüfmaschine eingespannt und mit einer Abzugsgeschwindigkeit von 250 mm/min gerissen. Die Reißdehnung ist die Dehnung im Augenblick des Reißens. Sie bezieht sich auf 23°C und 1 atm. Ihre Angabe erfolgt als $[(L-L_o)/L_o]x100$ (%), dabei bedeuten:

$L_o$ = die ursprüngliche Meßlänge,
L = die Meßlänge beim Reißen.

In entsprechender Weise ist die Reißkraft die im Augenblick des Reißens anzuwendende Kraft. Sie wird üblicherweise auf den Querschnitt bezogen angegeben.
Ferner wurde die Glasübergangstemperatur des Films bestimmt.
Es wurden die nachfolgenden Werte erhalten:

RF = 1,80
RD = 844
RA = 1519
Tg = -30°C

B1: Aus 249 g Wasser, 14,22 g einer 45 gew.-%igen wäßrigen Lösung von E2, 20 g einer 20 gew.-%igen wäßrigen Lösung von E1, 150,4 g EHA, 488,8 g nBA, 112,8 g MMA, 16 g MAA und 8,0 g einer 50 gew.-%igen wäßrigen Lösung von AM wurde eine wäßrige Monomerenemulsion erzeugt. aus 2,4 g Natriumperoxodisulfat und 75 g Wasser wurde eine wäßrige Initiatorlösung hergestellt. In einem gerührten Polymerisationsgefäß (2 1) aus Glas wurden 250 g Wasser und 1,6 g IA vorgelegt. Nach Spülen der Vorlage und des Polymerisationsgefäßes mit Stickstoff wurde die Vorlage auf 85°C erwärmt. Anschließend wurden dem Polymerisationsgefäß auf einmal 21,2 g der wäßrigen Monomerenemulsion und danach 7,7 g der wäßrigen Initiatorlösung zugegeben. Unter Aufrechterhaltung der 85°C wurde der Reaktorinhalt für 30 min unter Polymerisation sich selbst überlassen. Anschließend wurden unter Beibehalt der 85°C (zeitgleich beginnend) die Restmenge der wäßrigen Monomerenemulsion (innerhalb von 3 h) und die Restmenge der wäßrigen Initiatorlösung (innerhalb von 4 h) dem Polymerisationsgefäß kontinuierlich zugeführt. Nach Beendigung der Zufuhr der wäßrigen Initiatorlösung enthielt das Polymerisationsgefäß die wäßrige Dispersion eines Polymerisats 1, das wie folgt aufgebaut war:

63,2 Gew.-% nBA
19,4 Gew.-% EHA
14,6 Gew.-% MMA
2,1 Gew.-% MAA
0,5 Gew.-% AM
0,2 Gew.-% IA

Die Glasübergangstemperatur des zugehörigen Films betrug: $Tg^1$ = -29°C
Die wäßrige Dispersion des Polymerisats 1 wurde auf 40°C abgekühlt und auf einmal mit 48 g tBMA (5,8 Gew.-%, bezogen auf die insgesamt polymerisierten Monomeren) versetzt. Unter Aufrechterhaltung der 40°C wurde der Reaktorinhalt 10 min gerührt. Danach wurden auf einmal zunächst 3,2 g einer 50 gew.-%igen wäßrigen Lösung von tBHP und dann 0,8 g RC gelöst in 5 g Wasser zugegeben. Schließlich wurde die Temperatur des Reaktionsgemisches auf 60°C erhöht und das Reaktionsgemisch unter Rühren für 45 min bei dieser Temperatur gehalten (frei werdende Reaktionswärme wies die ablaufende Polymerisation aus). Abschließend wurde das Reaktionsgemisch auf 25°C abgekühlt und der pH-Wert des wäßrigen Dispergiermediums mittels 10 gew.-%iger wäßriger NaOH-Lösung auf einen Wert von 8,5 eingestellt. Der Feststoffgehalt der resultierenden wäßrigen Polymerisatdispersion B1 betrug 57 Gew.-% und der mittels Photonenkorrelationsspektroskopie bestimmte mittlere Polymerisatteilchendurchmesser lag bei 480 nm.
Die ermittelten mechanischen Eigenschaften des zugehörigen Polymerisatfilms waren:

RF = 3,65
RD = 1086
RA = 3964
Tg = -27°C
$Tg^i$ = 105°C

B2: Aus 240,5 g Wasser, 14,22 g einer 45 gew.-%igen wäßrigen Lösung von E2, 20 g einer 20 gew.-%igen wäßrigen Lösung von E1, 144 g EHA, 468 g nBA, 108 g MMA, 16 g MAA und 8 g einer 50 gew.-%igen wäßrigen Lösung von AM wurde eine wäßrige Monomerenemulsion hergestellt. Aus 2,4 g Natriumperoxodisulfat und 75 g Wasser wurde eine wäßrige Initiatorlösung erzeugt. In einem gerührten Polymerisationsgefäß (2 1) aus Glas wurden 250 g Wasser und 1,6 g IA vorgelegt. Nach Spülen der Vorlage und des Polymerisationsgefäßes mit Stickstoff wurde die Vorlage auf 85°C erwärmt. Dann wurden dem Polymerisationsreaktor auf einmal 20,55 g der wäßrigen Monomerenemulsion und 7,7 g der wäßrigen Initiatorlösung zugefügt. Unter Aufrechterhaltung der 85°C wurde der Reaktorinhalt für 30 min unter Polymerisation sich selbst überlassen. Anschließend wurden unter Beibehalt der 85°C (zeitgleich beginnend) die Restmenge der wäßrigen Monomerenemulsion (innerhalb von 3 h) und die Restmenge der wäßrigen Initiatorlösung (innerhalb von 4 h) dem Polymerisationsgefäß kontinuierlich zugeführt. Nach Beendigung der Zugabe der wäßrigen Initiatorlösung enthielt das Polymerisationsgefäß die wäßrige Dispersion eines Polymerisats 1, das wie folgt aufgebaut war:

63,1 Gew.-% nBA
19,4 Gew.-% EHA
14,6 Gew.-% MMA
2,2 Gew.-% MAA
0,5 Gew.-% AM
0,2 Gew.-% IA

Die Glasübergangstemperatur des zugehörigen Films betrug: $Tg^1$ = -29°C
Die wäßrige Dispersion des Polymerisats 1 wurde auf 40°C abgekühlt und auf einmal mit 80 g tBMA (9,7 Gew.-%, bezogen auf die insgesamt polymerisierten Monomeren) versetzt. Unter Aufrechterhaltung der 40°C wurde der Reaktorinhalt 10 min gerührt. Danach wurden auf einmal zunächst 4,8 g einer 50 gew.-%igen wäßrigen Lösung von tBHP und dann 1,2 g RC gelöst in 5 g Wasser zugegeben. Schließlich wurde die Temperatur des Reaktionsgemisches auf 60°C erhöht und das Reaktionsgemisch unter Rühren für 45 min bei dieser Temperatur gehalten (frei werdende Reaktionswärme wies die ablaufende Polymerisation aus). Abschließend wurde das Reaktionsgemisch auf 25°C abgekühlt und der pH-Wert des wäßrigen Dispergiermediums mittels 10 gew.-%iger wäßriger NaOH-Lösung auf einen Wert von 8,2 eingestellt. Der Feststoffgehalt der resultierenden wäßrigen Polymerisatdispersion B2 betrug 56,2 Gew.-% und der mittels Photonenkorrelationsspektroskopie bestimmte mittlere Polymerisatteilchendurchmesser lag bei 354 nm.
Die ermittelten mechanischen Eigenschaften des zugehörigen Polymerisatfilms waren:

RF = 3,71
RD = 708
RA = 2627
Tg = -25°C
$Tg^i$ = 105°C

B3: Wie B1, in der Polymerisationsstufe i wurde jedoch anstelle von tBMA nBMA verwendet. Ferner wurde der pH-Wert des wäßrigen Dispergiermediums auf einen Wert von 8,1 eingestellt. Der Feststoffgehalt der resultierenden wäßrigen Polymerisatdispersion B3 betrug 55,6 Gew.-% und der mittels Photonenkorrelationsspektroskopie bestimmte mittlere Polymerisatteilchendurchmesser lag bei 330 nm.
Die ermittelten mechanischen Eigenschaften des zugehörigen Polymerisatfilms waren:

RF = 2,52
RD = 1222
RA = 3079
Tg = -28°C
$Tg^i$ = 20°C

B4: Wie B1, anstelle von tBMA wurde jedoch iBMA in der Polymerisationsstufe i verwendet. Der Feststoffgehalt

der resultierenden wäßrigen Polymerisatdispersion B4 betrug 56,8 Gew.-% und der mittels Photonenkorrelationsspektroskopie bestimmte mittlere Polymerisatteilchendurchmesser lag bei 390 nm.
Die ermittelten mechanischen Eigenschaften des zugehörigen Polymerisatfilms waren:

RF = 2,84
RD = 1188
RA = 3374
Tg = -29°C
$Tg^i$ = 53°C

B5: Wie B1, anstelle von tBMA wurde jedoch Styrol in der Polymerisationsstufe i verwendet. Der Feststoffgehalt der resultierenden wäßrigen Polymerisatdispersion B5 betrug 56,1 Gew.-% und der mittels Photonenkorrelationsspektroskopie bestimmte mittlere Polymerisatteilchendurchmesser lag bei 350 nm.
Die ermittelten mechanischen Eigenschaften des zugehörigen Polymerisatfilms waren:

RF = 3,05
RD = 864
RA = 2580
Tg = -27°C
$Tg^i$ = 100°C

B6: Wie B1, anstelle von tBMA wurde jedoch alMS in der Polymerisationsstufe i verwendet. Der Feststoffgehalt der resultierenden wäßrigen Polymerisatdispersion betrug 53,4 Gew.-% und der mittels Photonenkorrelationsspektroskopie bestimmte mittlere Polymerisatteilchendurchmesser lag bei 320 nm.
Die ermittelten mechanischen Eigenschaften des zugehörigen Polymerisatfilms waren:

RF = 2,46
RD = 885
RA = 2177
Tg = -28°C
$Tg^i$ = 136°C

VB2: Aus 160 g Wasser, 14,22 g einer 45 gew.-%igen wäßrigen Lösung von E2, 40 g einer 20 gew.-%igen Lösung von E1, 160 g EHA, 520 g nBA, 120 g MMA und 16 g einer 50 gew.-%igen wäßrigen Lösung von AM wurde eine wäßrige Monomerenemulsion hergestellt. Aus 70 g Wasser und 3,2 g RC wurde eine wäßrige Lösung eines Reduktionsmittels hergestellt. Aus 13,6 g einer 50 gew.-%igen wäßrigen Lösung von tBHP und 70 g Wasser wurde eine wäßrige Hydroperoxidlösung hergestellt. In ein gerührtes Polymerisationsgefäß (2 1) aus Glas wurden 250 g Wasser und 0,002 g des $Fe^{2+}/2Na^{+}$-Salzes der Ethylendiamintetraessigsäure vorgelegt. Nach Spülen der Vorlage und des Polymerisationsgefäßes mit Stickstoff wurde die Vorlage auf 60°C erwärmt. Anschließend wurden dem Polymerisationsgefäß auf einmal zunächst 20,6 g der wäßrigen Monomerenemulsion und danach 7,32 g der wäßrigen Reduktionsmittellösung sowie 8,36 der wäßrigen Hydroperoxidlösung zugefügt. Unter Aufrechterhaltung der 60°C wurde der Reaktorinhalt für 30 min unter Polymerisation sich selbst überlassen. Anschließend wurden unter Beibehalt der 60°C (zeitgleich beginnend und wie stets über getrennte Zuläufe) die Restmenge der wäßrigen Monomerenemulsion (innerhalb von 3 h), die Restmenge der wäßrigen Reduktionsmittellösung (innerhalb von 4 h) und die Restmenge der wäßrigen Hydroperoxidlösung (innerhalb von 4 h) dem Polymerisationsgefäß kontinuierlich zugeführt. Danach wurde das Polymerisationsgemisch noch 1 h bei 60°C gerührt. Dann wurde mittels einer 10 gew.-%igen wäßrigen NaOH-Lösung der pH-Wert des wäßrigen Dispergiermediums auf einen Wert von 8,5 eingestellt. Die resultierende wäßrige Polymerisatdispersion VB2 wies einen Feststoffgehalt von 58,0 Gew.-% und einen mittels Photonenkorrelationsspektroskopie bestimmten mittleren Polymerisatteilchendurchmesser von 230 nm auf.
Das dispergierte Polymerisat wies folgende Zusammensetzung auf:

64,4 Gew.-% nBA
19,8 Gew.-% EHA
14,8 Gew.-% MMA
1,0 Gew.-% AM

Die ermittelten mechanischen Eigenschaften des zugehörigen Polymerisatfilms waren:

RF = 0,28
RD = 674
RA = 188
Tg = -36°C

B7: Aus 200 g Wasser, 14,22 g einer 45 gew.-%igen wäßrigen Lösung von E2, 40 g einer 20 gew.-%igen Lösung von E1, 156,8 g EHA, 509,6 g nBA, 117,6 g MMA und 16 g einer 50 gew.-%igen wäßrigen Lösung von AM wurde eine wäßrige Monomerenemulsion hergestellt. Aus 3,2 g RC und 70 g Wasser wurde eine wäßrige Lösung eines Reduktionsmittels hergestellt. Aus 13,6 g einer 50 gew.-%igen wäßrigen Lösung von tBHP in 70 g Wasser wurde eine wäßrige Hydroperoxidlösung hergestellt. In ein gerührtes Polymerisationsgefäß (2 1) aus Glas wurden 200 g Wasser und 0,002 g des $Fe^{2+}/2Na^{+}$-Salzes der Ethylendiamintetraessigsäure vorgelegt. Nach Spülen der Vorlage und des Polymerisationsgefäßes mit Stickstoff wurde die Vorlage auf 60°C erwärmt. Anschließend wurden dem Polymerisationsgefäß auf einmal zunächst 21,08 g der wäßrigen Monomerenemulsion und danach 7,32 g der wäßrigen Reduktionsmittellösung sowie 8,36 der wäßrigen Hydroperoxidlösung zugefügt. Unter Aufrechterhaltung der 60°C wurde der Reaktorinhalt für 30 min unter Polymerisation sich selbst überlassen. Anschließend wurden unter Beibehalt der 60°C (zeitgleich beginnend) die Restmenge der wäßrigen Monomerenemulsion (innerhalb von 3 h), die Restmenge der wäßrigen Reduktionsmittellösung (innerhalb von 4 h) und die Restmenge der wäßrigen Hydroperoxidlösung (innerhalb von 4 h) dem Polymerisationsgefäß kontinuierlich zugeführt. Nach beendeter Zufuhr enthielt das Polymerisationsgefäß eine wäßrige Dispersion eines Polymerisats 1, das wie folgt aufgebaut war:

64,3 Gew.-% nBA 19,8 Gew.-% EHA
14,9 Gew.-% MMA
1,0 Gew.-% AM

Die Glasübergangstemperatur des zugehörigen Films betrug: $Tg^1$ = -32°C
Die wäßrige Dispersion des Polymerisats 1 wurde auf 40°C abgekühlt und auf einmal mit 16 g tBMA (2 Gew.-%, bezogen auf die insgesamt polymerisierten Monomeren) versetzt. Unter Aufrechterhaltung der 40°C wurde der Reaktorinhalt 10 min gerührt. Danach wurden auf einmal zunächst 3,2 g einer 50 gew.-%igen wäßrigen Lösung von tBHP und dann 0,8 g RC gelöst in 10 g Wasser zugegeben. Schließlich wurde die Temperatur des Reaktionsgemisches auf 60°C erhöht und das Reaktionsgemisch unter Rühren für 45 min bei dieser Temperatur gehalten (frei werdende Reaktionswärme wies die ablaufende Polymerisation aus). Abschließend wurde das Reaktionsgemisch auf 25°C abgekühlt und der pH-Wert des wäßrigen Dispergiermediums mittels 10 gew.-%iger wäßriger NaOH-Lösung auf einen Wert von 9,2 eingestellt. Der Feststoffgehalt der resultierenden wäßrigen Polymerisatdispersion B7 betrug 56,6 Gew.-% und der mittels Photonenkorrelationsspektroskopie bestimmte mittlere Polymerisatteilchendurchmesser lag bei 230 nm.
Die ermittelten mechanischen Eigenschaften des zugehörigen Polymerisatfilms waren:

RF = 0,47
RD = 653
RA = 307
Tg = -28°C
$Tg^i$ = 105°C

B8: Aus 200 g Wasser, 14,22 g einer 45 gew.-%igen wäßrigen Lösung von E2, 40 g einer 20 gew.-%igen Lösung von E1, 150,4 g EHA, 488,8 g nBA, 112,8 g MMA und 16 g einer 50 gew.-%igen wäßrigen Lösung von AM wurde eine wäßrige Monomerenemulsion hergestellt. Aus 3,2 g RC und 70 g Wasser wurde eine wäßrige Lösung eines Reduktionsmittels hergestellt. Aus 13,6 g einer 50 gew.-%igen wäßrigen tBHP-Lösung und 70 g Wasser wurde eine wäßrige Hydroperoxidlösung hergestellt. In einem Polymerisationsgefäß (2 l) aus Glas wurden 200 g Wasser und 0,002 g des $Fe^{2+}/2Na^{+}$-Salzes der Ethylendiamintetraessigsäure vorgelegt. Nach Spülen der Vorlage und des Polymerisationsgefäßes mit Stickstoff wurde die Vorlage auf 60°C erwärmt. Anschließend wurden dem Polymerisationsgefäß auf einmal zunächst 21,08 g der wäßrigen Monomerenemulsion und danach 7,32 g der wäßrigen Reduktionsmittellösung sowie 8,36 g der wäßrigen Hydroperoxidlösung zugefügt. Unter Aufrechterhaltung der 60°C wurde der Reaktorinhalt für 30 min unter Polymerisation sich selbst überlassen. Anschließend wurden unter Beibehalt der 60°C (zeitgleich beginnend) die Restmenge der wäßrigen Monomerenemulsion (innerhalb von 3 h), die Restmenge der wäßrigen Reduktionsmittellösung (innerhalb von 4 h) und die Restmenge der wäßrigen Hydroperoxidlösung (innerhalb von 4 h) dem Polymerisationsgefäß kontinuierlich zugeführt. Nach beendeter Zufuhr enthielt das Polymerisationsgefäß eine

wäßrige Dispersion eines Polymerisats 1, das wie folgt aufgebaut war:

64,3 Gew.-% nBA
19,8 Gew.-% EHA
14,9 Gew.-% MMA
1,0 Gew.-% AM

Die Glasübergangstemperatur des zugehörigen Films betrug: $Tg^1$ = -33°C
Die wäßrige Dispersion des Polymerisats 1 wurde auf 40°C abgekühlt und auf einmal mit 48 g tBMA (5,9 Gew.-%, bezogen auf die insgesamt polymerisierten Monomeren) versetzt. Unter Aufrechterhaltung der 40°C wurde der Reaktorinhalt 10 min gerührt. Danach wurden auf einmal zunächst 3,2 g einer 50 gew.-%igen wäßrigen Lösung von tBHP und dann 0,8 g RC gelöst in 10 g Wasser zugegeben. Schließlich wurde die Temperatur des Reaktionsgemisches auf 60°C erhöht und das Reaktionsgemisch unter Rühren für 45 min bei dieser Temperatur gehalten (frei werdende Reaktionswärme wies die ablaufende Polymerisation aus). Abschließend wurde das Reaktionsgemisch auf 25°C abgekühlt und der pH-Wert des wäßrigen Dispergiermediums mittels 10 gew.-%iger NaOH-Lösung auf einen Wert von 9,2 eingestellt. Der Feststoffgehalt der resultierenden wäßrigen Polymerisatdispersion B8 betrug 56,7 Gew.-% und der mittels Photonenkorrelationsspektroskopie bestimmte mittlere Polymerisatteilchendurchmesser lag bei 330 nm.
Die ermittelten mechanischen Eigenschaften des zugehörigen Polymerisatfilms waren:

RF = 0,83
RD = 898
RA = 745
Tg = -33°C
$Tg^i$ = 105°C

B9: Aus 200 g Wasser, 14,22 g einer 45 gew.-%igen wäßrigen Lösung von E2, 40 g einer 20 gew.-%igen Lösung von E1, 144 g EHA, 468 g nBA, 108 g MMA und 16 g einer 50 gew.-%igen wäßrigen Lösung von AM wurde eine wäßrige Monomerenemulsion hergestellt. Aus 3,2 g RC und 70 g Wasser wurde eine wäßrige Lösung eines Reduktionsmittels hergestellt. Aus 13,6 g einer 50 gew.-%igen wäßrigen tBHP-Lösung und 70 g Wasser wurde eine wäßrige Hydroperoxidlösung hergestellt. In einem Polymerisationsgefäß (2 l) aus Glas wurden 200 g Wasser und 0,002 g des $Fe^{2+}/2Na^{+}$-Salzes der Ethylendiamintetraessigsäure vorgelegt. Nach Spülen der Vorlage und des Polymerisationsgefäßes mit Stickstoff wurde die Vorlage auf 60°C erwärmt. Anschließend wurden dem Polymerisationsgefäß auf einmal zunächst 21,08 g der wäßrigen Monomerenemulsion und danach 7,32 g der wäßrigen Reduktionsmittellösung sowie 8,36 der wäßrigen Hydroperoxidlösung zugefügt. Unter Aufrechterhaltung der 60°C wurde der Reaktorinhalt für 30 min unter Polymerisation sich selbst überlassen. Anschließend wurden unter Beibehalt der 60°C (zeitgleich beginnend) die Restmenge der wäßrigen Monomerenemulsion (innerhalb von 3 h), die Restmenge der wäßrigen Reduktionsmittellösung (innerhalb von 4 h) und die Restmenge der wäßrigen Hydroperoxidlösung (innerhalb von 4 h) dem Polymerisationsgefäß kontinuierlich zugeführt. Nach beendeter Zufuhr enthielt das Polymerisationsgefäß eine wäßrige Dispersion eines Polymerisats 1, das wie folgt aufgebaut war:

64,3 Gew.-% nBA
19,8 Gew.-% EHA
14,8 Gew.-% MMA
1,1 Gew.-% AM

Die Glasübergangstemperatur des zugehörigen Films betrug: $Tg^1$ = -33°C
Die wäßrige Dispersion des Polymerisats 1 wurde auf 40°C abgekühlt und auf einmal mit 80 g tBMA (9,9 Gew.-%, bezogen auf die insgesamt polymerisierten Monomeren) versetzt. Unter Aufrechterhaltung der 40°C wurde der Reaktorinhalt 10 min gerührt. Danach wurden auf einmal zunächst 3,2 g einer 50 gew.-%igen wäßrigen Lösung von tBHP und dann 0,8 g RC gelöst in 10 g Wasser zugegeben. Schließlich wurde die Temperatur des Reaktionsgemisches auf 60°C erhöht und das Reaktionsgemisch unter Rühren für 45 min bei dieser Temperatur gehalten (frei werdende Reaktionswärme wies die ablaufende Polymerisation aus). Abschließend wurde das Reaktionsgemisch auf 25°C abgekühlt und der pH-Wert des wäßrigen Dispergiermediums mittels 10 gew.-%iger wäßriger NaOH-Lösung auf einen Wert von 9,2 eingestellt. Der Feststoffgehalt der resultierenden wäßrigen Polymerisatdispersion B9 betrug 56,9 Gew.-% und der mittels Photonenkorrelationsspektroskopie bestimmte mittlere Polymerisatteilchendurchmesser lag bei 310 nm.

Die ermittelten mechanischen Eigenschaften des zugehörigen Polymerisatfilms waren:

RF = 1,55  
RD = 565  
RA = 876  
Tg = -32°C  
$Tg^i$ = 105°C

B10: Wie B8, anstelle von tBMA wurde jedoch nBMA in der Polymerisationsstufe i eingesetzt. Die resultierende wäßrige Polymerisatdispersion wies einen Feststoffgehalt von 56,8 Gew.-% auf. Der pH-Wert des wäßrigen Dispergiermediums wurde auf einen Wert von 9,5 eingestellt. Der mittels Photonenkorrelationsspektroskopie ermittelte mittlere Polymerisatteilchendurchmesser betrug 250 nm.
Die ermittelten mechanischen Eigenschaften des zugehörigen Polymerisatfilms waren:

RF = 0,60  
RD = 958  
RA = 575  
Tg = -34°C  
$Tg^i$ = 20°C

B11: Wie B8, anstelle von tBMA wurde jedoch iBMA in der Polymerisationsstufe i eingesetzt. Die resultierende wäßrige Polymerisatdispersion wies einen Feststoffgehalt von 57 Gew.-% auf. Der pH-Wert des wäßrigen Dispergiermediums wurde auf einen Wert von 10,0 eingestellt. Der mittels Photonenkorrelationsspektroskopie ermittelte mittlere Polymerisatteilchendurchmesser betrug 340 nm.
Die ermittelten mechanischen Eigenschaften des zugehörigen Polymerisatfilms waren:

RF = 0,90  
RD = 562  
RA = 506  
Tg = -34°C  
$Tg^i$ = 53°C

B12: Wie B8, anstelle von tBMA wurde jedoch MMA in der Polymerisationsstufe i eingesetzt. Die resultierende wäßrige Polymerisatdispersion wies einen Feststoffgehalt von 56,7 Gew.-% auf. Der pH-Wert des wäßrigen Dispergiermediums wurde auf einen Wert von 9,0 eingestellt. Der mittels Photonenkorrelationsspektroskopie ermittelte mittlere Polymerisatteilchendurchmesser betrug 320 nm.
Die ermittelten mechanischen Eigenschaften des zugehörigen Polymerisatfilms waren:

RF = 1,15  
RD = 704  
RA = 810  
Tg = -34°C  
$Tg^i$ = 105°C

B13: Wie B8, anstelle von tBMA wurde jedoch Styrol in der Polymerisationsstufe i eingesetzt. Die resultierende wäßrige Polymerisatdispersion wies einen Feststoffgehalt von 55,2 Gew.-% auf. Der pH-Wert des wäßrigen Dispergiermediums wurde auf einen Wert von 8,5 eingestellt. Der mittels Photonenkorrelationsspektroskopie ermittelte mittlere Polymerisatteilchendurchmesser betrug 280 nm.
Die ermittelten mechanischen Eigenschaften des zugehörigen Polymerisatfilms waren:

RF = 0,40  
RD = 819  
RA = 328  
Tg = -34°C  
$Tg^i$ = 100°C

B14: Wie B8, anstelle von tBMA wurde jedoch aIMS in der Polymerisationsstufe i eingesetzt. Die resultierende wäßrige Polymerisatdispersion wies einen Feststoffgehalt von 53,6 Gew.-% auf. Der pH-Wert des wäßrigen

Dispergiermediums wurde auf einen Wert von 9,4 eingestellt. Der mittels Photonenkorrelationsspektroskopie ermittelte mittlere Polymerisatteilchendurchmesser betrug 310 nm.
Die ermittelten mechanischen Eigenschaften des zugehörigen Polymerisatfilms waren:

RF = 0,41
RD = 795
RA = 326
Tg = -35°C
$Tg^i$ = 136°C

VB3: Wie B8, anstelle von tBMA wurde jedoch BDA2 in der Polymerisationsstufe i eingesetzt. Die resultierende wäßrige Polymerisatdispersion wies einen Feststoffgehalt von 56,2 Gew.-% auf. Der pH-Wert des wäßrigen Dispergiermediums wurde auf einen Wert von 9,5 eingestellt. Der mittels Photonenkorrelationsspektroskopie ermittelte mittlere Polymerisatteilchendurchmesser betrug 250 nm.
Die ermittelten mechanischen Eigenschaften des zugehörigen Polymerisatfilms waren:

RF = 0,95
RD = 501
RA = 475
Tg = -36°C
$Tg^i$ = -

VB4: Wie B8, anstelle von 48 g tBMA wurde jedoch ein Gemisch bestehend aus 24 g tBMA und 24 g BDA2 in der Polymerisationsstufe i eingesetzt. Die resultierende wäßrige Polymerisatdispersion wies einen Feststoffgehalt von 57,5 Gew.-% auf.
Der mittels Photonenkorrelationsspektroskopie ermittelte Polymerisatteilchendurchmesser betrug 186 nm.
Die ermittelten mechanischen Eigenschaften des zugehörigen Polymerisatfilms waren:

RF = 0,35
RD = 375
RA = 131
Tg = -31,7°C

VB5: Wie B11, anstelle von 48 g iBMA wurde jedoch ein Gemisch bestehend aus 34 g iBMA und 24 g BDA2 in der Polymerisationsstufe i eingesetzt. Die resultierende wäßrige Polymerisatdispersion wies einen Feststoffgehalt von 57,5 Gew.-% auf. Der mittels Photonenkorrelationsspektroskopie ermittelte Polymerisatteilchendurchmesser betrug 212 nm.
Die ermittelten mechanischen Eigenschaften des zugehörigen Polymerisatfilms waren:

RF = 0,46
RD = 315
RA = 145
Tg = -31°C

VB6: Wie B8, die Polymerisationsstufe i entfiel jedoch. Statt dessen wurden die 48 g tBMA in die wäßrige Monomerenemulsion zur Herstellung des Polymerisats 1 eingearbeitet. Das Redoxinitiatorsystem der Polymerisationsstufe i wurde zum Nachpolymerisieren verwendet. Die resultierende wäßrige Polymerisatdispersion wies einen Feststoffgehalt von 56,8 Gew.-% auf. Der mittels Photonenkorrelationsspektroskopie ermittelte Polymerisatteilchendurchmesser betrug 354 nm.
Die ermittelten mechanischen Eigenschaften des zugehörigen Polymerisatfilms waren:

RF = 0,47
RD = 829
RA = 381
Tg = -27°C

VB7: Wie B1, die Polymerisationsstufe i entfiel jedoch. Statt dessen wurden die 48 g tBMA in die wäßrige Monomerenemulsion zur Herstellung des Polymerisats 1 eingearbeitet. Das Redoxinitiatorsystem der Polymerisationsstufe i wurde zum Nachpolymerisieren verwendet. Die resultierende wäßrige Polymerisatdispersion wies einen Feststoffgehalt von 56,5 Gew.-% auf. Der mittels Photonenkorrelationsspektroskopie ermittelte Polymerisatteilchendurchmesser betrug 363 nm.
Die ermittelten mechanischen Eigenschaften des zugehörigen Polymerisatfilms waren:

RF = 1,03
RD = 947
RA = 975
Tg = -20,5°C

VB8: Wie B1, die Polymerisationsstufe i wurde jedoch so gestaltet, daß die 48 g tBMA dem Polymerisationsgefäß bei konstanter Polymerisationstemperatur von 60°C innerhalb von 1 h als reiner Monomerenzulauf kontinuierlich zugeführt wurden. In entsprechender Weise wurde das Redoxinitiatorsystem zeitlich beginnend innerhalb von 70 min dem Polymerisationsgefäß kontinuierlich zugeführt. Der Polymerisationsumsatz der in der Polymerisationsstufe i zu irgendeinem Zeitpunkt bereits zugeführten Monomeren lag so zu jedem Zeitpunkt bei >80 mol-%. Die resultierende wäßrige Polymerisatdispersion wies einen Feststoffgehalt von 55,3 Gew.-% auf. Der mittels Photonenkorrelationsspektroskopie ermittelte Polymerisatteilchendurchmesser betrug 368 nm.
Die ermittelten mechanischen Eigenschaften des zugehörigen Polymerisatfilms waren:

RF = 2,99
RD = 740
RA = 2212
Tg = -23,8°C

VB9: Wie B8, die Polymerisationsstufe i wurde jedoch so gestaltet, daß die 48 g tBMA dem Polymerisationsgefäß bei konstanter Polymerisationstemperatur innerhalb von 1 h als reiner Monomerenzulauf kontinuierlich zugeführt wurden. In entsprechender Weise wurde das Redoxinitiatorsystem zeitlich beginnend innerhalb von 70 min dem Polymerisationsgefäß kontinuierlich zugeführt. Der Polymerisationsumsatz der in der Polymerisationsstufe i zu irgendeinem Zeitpunkt bereits zugeführten Monomeren lag so zu jedem Zeitpunkt bei >80 mol-%. Die resultierende wäßrige Polymerisatdispersion wies einen Feststoffgehalt von 55,9 Gew.-% auf. Der mittels Photonenkorrelationsspektroskopie ermittelte Polymerisatteilchendurchmesser betrug 369 nm.
Die ermittelten mechanischen Eigenschaften des zugehörigen Polymerisatfilms waren:

RF = 1,19
RD = 385
RA = 458,2
Tg = -29,3°C

VB10: Wie VB2, anstelle 13,6 g wäßriger tBHP-Lösung wurden jedoch nur 4,8 g verwendet. Ferner wurden als Reduktionsmittel anstelle von 3,2 g RC 2,4 g AcBS verwendet. Außerdem betrug die Polymerisationstemperatur 70°C. Die resultierende wäßrige Polymerisatdispersion wies einen Feststoffgehalt von 57,8 Gew.-% auf. Der mittels Photonenkorrelationsspektroskopie ermittelte Polymerisatteilchendurchmesser betrug 259 nm.
Die ermittelten mechanischen Eigenschaften des zugehörigen Polymerisatfilms waren:

RF = 0,27
RD = 866
RA = 234
Tg = -32,2°C

B15: Wie B8, anstelle 13,6 g wäßriger tBHP-Lösung wurden jedoch nur 4,8 g verwendet. Ferner wurden zur Herstellung der Polymerisats 1 anstelle von 3,2 g RC 2,4 g AcBS verwendet und die Polymerisation bei 70°C durchgeführt. In der Polymerisationsstufe i wurden 4,8 g an wäßriger tBHP-Lösung verwendet sowie anstelle von 0,8 g RC 1,6 g AcBS. Außerdem wurde anstatt 10 min 12 h bei 40°C gerührt. Die resultierende wäßrige Polymerisatdispersion wies einen Feststoffgehalt von 59,7 Gew.-% auf. Der mittels Photonenkorrelationsspektroskopie ermittelte Polymerisatteilchendurchmesser betrug 333 nm.
Die ermittelten mechanischen Eigenschaften des zugehörigen Polymerisatfilms waren:

RF = 0,89
RD = 1035
RA = 921
Tg = -30,7°C

B16: Wie B9, anstelle 13,6 g wäßriger tBHP-Lösung wurden jedoch nur 4,8 g verwendet. Ferner wurden zur Herstellung der Polymerisats 1 anstelle von 3,2 g RC 2,4 g AcBS verwendet und die Polymerisation bei 70°C durchgeführt. In der Polymerisationsstufe i wurden 4,8 g an wäßriger tBHP-Lösung verwendet sowie anstelle von 0,8 g RC 1,6 g AcBS. Außerdem wurde anstatt 10 min 12 h bei 40°C gerührt. Die resultierende wäßrige Polymerisatdispersion wies einen Feststoffgehalt von 58,7 Gew.-% auf. Der mittels Photonenkorrelationsspektroskopie ermittelte Polymerisatteilchendurchmesser betrug 345 nm.
Die ermittelten mechanischen Eigenschaften des zugehörigen Polymerisatfilms waren:

RF = 1,26
RD = 788
RA = 993
Tg = -30,2°C

VB17: Vergleichsbeispiel 17 veranschaulicht die Herstellung einer Polymerdispersion zur Verwendung als Haftklebstoff durch herkömmliche Emulsionspolymerisation von Acryl-Monomeren ohne eine Quellungspolymerisationsstufe. Eine Monomerenemulsion wird durch Emulgieren von 17,78 g 45 %igem E2, 60 g 20 %igem E1, 264,0 g nBMA, 504,0 g EHA und 32,0 g AA in 230 g Wasser hergestellt. Eine Lösung des oxidierenden Agenz wird durch Lösen von 11,4 g einer 70 %igen wässrigen tBHP-Lösung in 70 g Wasser hergestellt. Eine Lösung des reduzierenden Agenz wird durch Lösen von 4,0 g RC in 70 g Wasser hergestellt. Ein gerührter 2 1 Glasreaktor enthält unter Stickstoff Schutzgas 250 g Wasser und 1,26 g einer 1,4 %igen wässrigen DS-Lösung und wird auf 60 °C erwärmt. Bei 60 °C werden 2 % der oben angegebenen Monomerenemulsion, 10 % der oben angegebenen Lösung des oxidierenden Agenz und 10 % der oben angegebenen Lösung des reduzierenden Agenz in den Reaktor gegeben und nach 30 Minuten Reaktion beginnt die Zugabe von Monomerenemulsion und Initiator. Der Reaktor wird durch eine automatische Temperaturkontrolleinheit auf 60 °C gehalten. Die restliche Monomerenemulsion wird über einen Zeitraum von 3 Stunden kontinuierlich dem Reaktor zugeführt und die verbleibenden Lösungen des oxidierenden und des reduzierenden Agenz werden getrennt voneinander und kontinuierlich innerhalb von 4 Stunden in den Reaktor gegeben. Nach der kontinuierlichn Zugabe der oxidierenden und reduzierenden Lösungen werden 2,3 g einer 70 %igen wässrigen tBHP-Lösung und 0,8 g RC getrennt voneinander in den Reaktor gegeben. Der Reaktor wird eine weitere Stunde auf 60 °C gehalten, analog wie in den folgenden Quellungspolymerisationsbeispielen. Die resultierende Dispersion wird dann auf Zimmertemperatur abgekühlt, mit konzentrierter Ammoniaklösung (etwa 25 %) auf pH 7,3 neutralisiert und dann durch ein 150 μm Filter filtriert. Es ist kein Koagulat vorhanden. Die fertige Dispersion hat einen Gesamtfeststoffgehalt von 54 % und einen gewichtsmittleren Teilchendurchmesser von 175 nm, gemessen mittels Photonenkorrelationsspektroskopie (Nanosizer). Die Glastemperatur des nBMA/EHA Copolymers gemäß der Foxgleichung ist -48,5 °C. Die Eigenschaften der Dispersion sind in Tab. 1 angegeben.

B17: In Beispiel 17 wird eine Quellungspolymerisation analog zum Vergleichsbeispiel 17 durchgeführt, jedoch mit 2 % tBMA in der Quellungspolymerisationsstufe. Eine Monomerenemulsion wird durch Emulgieren von 17,78 g 45 %igem E2, 60 g 20 %igem E1, 258,7 g nBMA, 494,0 g EHA und 31,4 g AA in 245,6 Wasser hergestellt. Eine Lösung des oxidierenden Agenz wird durch Lösen von 11,4 g einer 70 %igen wässrigen tBHP-Lösung in 70 g Wasser hergestellt. Eine Lösung des reduzierenden Agenz wird durch Lösen von 4,0 g RC in 70 g Wasser hergestellt. Ein gerührter, 2 1 Glasreaktor enthält 250 g Wasser und 1,26 g einer 1,4 %igen wässrigen DS-Lösung unter Stickstoffschutzgasatmosphäre und wird auf 60 °C erhitzt. Bei 60 °C werden 2 % der obigen Monomerenemulsion, 10 % der obigen Lösung des oxidierenden Agenz und 10 % der obigen Lösung des reduzierenden Agenz in den Reaktor gegeben und nach 30 Minuten Reaktion wird die kontinuierlich Zugabe der Monomerenemulsion gestartet. Der Reaktor wird durch eine automatische Temperaturkontrolleinheit bei 60 °C gehalten. Die restliche Monomerenemulsion wird kontinuierlich innerhalb von 3 Stunden in den Reaktor gegeben und die restlichen Lösungen von oxidierendem und reduzierendem Agenz werden getrennt voneinander und kontinuierlich innerhalb von 4 Stunden in den Reaktor gegeben. Nach der kontinuierlichn Zugabe der oxidierenden und reduzierenden Lösung wird der Reaktorinhalt auf 40 °C gekühlt und 16 g tBMA werden in den Reaktor gegeben. Die Quellung der vorhandenen Polymerpartikel durch tBMA findet 20 Minuten bei 40 °C statt. Nach dieser Quellung werden 2,3 g einer 70 %igen wässrigen tBHP-Lösung und 0,8

g RC getrennt voneinander in den Reaktor gegeben. Der Reaktor wird dann von 40 °C auf 60 °C erhitzt und die Polymerisation eine Stunde bei 60 °C fortgeführt. Die resultierende Dispersion wird dann auf Zimmertemperatur abgekühlt und mit konzentrierter Ammoniaklösung (etwa 25 %) auf pH 7,3 neutralisiert und dann durch ein 150 μm Filter filtriert. Es ist kein Koagulat vorhanden. Die fertige Dispersion hat einen Feststoffgehalt von 52,6 % und einen mittleren Teilchendurchmesser von 211 nm, gemessen mittels Photonenkorrelationsspektroskopie (Nanosizer). Die Glastemperatur des nBMA/EHA Copolymers der ersten Stufe ist gemäß der Foxgleichung -48,5 °C. Die Glastemperatur von Poly(tBMA) ist 105 °C. Die Eigenschaften der Dispersion sind in Tab. 1 angegeben.

B18: Beispiel 18 wird analog zu Beispiel 17 ausgeführt, jedoch mit 5 % tBMA in der Quellungspolymerisationsstufe. Die Monomerenemulsion wird aus 17,78 g 45 % E2, 60 g 20 % E1, 250,8 g nBMA, 478,8 g EHA und 30,4 g AA in 270,0 g Wasser hergestellt. Dann wird verfahren wie in Beispiel 17 mit der Ausnahme, dass 40 g tBMA anstelle von 16 g in den Reaktor gegeben werden. Die fertige Dispersion hat einen Feststoffgehalt von 51,8 % und einen mittleren Teilchendurchmesser von 190 nm, gemessen mittels Photonenkorrelationsspektroskopie (Nanosizer). Die Glastemperatur des nBMA/EHA Copolymers gemäß der Foxgleichung ist -48,5 °C. Die Glastemperatur von Poly(tBMA) ist 105 °C. Die Eigenschaften der Dispersion sind in Tab. 1 angegeben.

B19: Beispiel 19 wird analog zu Beispiel 17 durchgeführt, jedoch mit 10 % tBMA in der Quellungspolymerisationsstufe. Die Monomerenemulsion wird aus 17,78 g 45 % E2, 60 g 20 % E1, 237,6 g nBMA, 453,6 g EHA und 28,8 g AA in 310,0 g Wasser hergestellt. Dann wird verfahren wie in Beispiel 17 mit der Ausnahme, dass 80 g tBMA anstelle von 16 g in den Reaktor gegeben werden. Die fertige Dispersion hat einen Feststoffgehalt von 50,5 % und mittleren Teilchendurchmesser von 170 nm, gemessen mittels Photonenkorrelationsspektroskopie (Nanosizer). Die Eigenschaften sind in Tab. 1 aufgelistet.

Prüfmethoden für Haftklebstoffe

a) Herstellung der Prüfstreifen Die zu prüfende Dispersion wird entweder als solche verwendet oder im Verhältnis 70/30 (bezogen auf Feststoff) mit einer handelsüblichen wäßrigen Kolophoniumharzester-Dispersion (Tacolyn 3179, Fa. Hercules) abgemischt. Die Mischung wird mit einer Rakel in dünner Schicht auf ein silikonisiertes Papier aufgetragen und 3 min bei 90°C getrocknet. Die Spalthöhe der Rakel wird dabei so gewählt, daß sich für den getrockneten Klebstoff eine Auftragsmenge von 19-21 g/m$^2$ ergibt. Auf den getrockneten Klebstoff wird handelsübliches weißes Etikettenpapier (Flächengewicht 80 g/m$^2$) aufgelegt und mit einem. Handroller fest angerollt. Das so hergestellte Etikettenlaminat wird in Streifen von 0,5 inch (1,27 cm) und von 2 cm Breite geschnitten. Diese Streifen werden vor der Prüfung mindestens 24h im Normklima (23 °C, 50% relative Luftfeuchte) gelagert.

b) Prüfung der Scherfestigkeit (shear) als Maß für die Kohäsion (in Anlehnung an FINAT FTM 7)

Nach Abziehen des silikonisierten Papiers wird der Etiketten-Prüfstreifen so auf den Rand eines Prüfblechs aus Edelstahl geklebt, daß sich eine Verklebungsfläche von 0,5 inch x 0,5 inch (1,27 x 1,27 cm) ergibt. 20 Minuten nach dem Verkleben wird am überstehenden Ende des Papierstreifens ein 500 g-Gewicht befestigt und das Prüfblech senkrecht aufgehängt. Umgebungsbedingungen: 23°C, 50 % relative Luftfeuchtigkeit. Als Scherfestigkeit wird die Zeit bis zum Versagen der Verklebung unter Einfluß des Gewichts als Mittelwert aus den Ergebnissen von drei Prüfkörpern in Minuten angegeben.

c) Prüfung der Schälfestigkeit (peel) als Maß für die Adhäsion (in Anlehnung an FINAT FTM 1)

Nach Abziehen des silikonisierten Papiers wird ein 2 cm breiter Etiketten-Prüfstreifen auf ein Prüfblech aus Edelstahl geklebt. Umgebungsbedingungen: 23°C, 50 % relative Luftfeuchtigkeit. 1 Minute nach der Verklebung wird der Streifen mit Hilfe einer Zugprüfmaschine in einem Winkel von 180°C mit einer Geschwindigkeit von 75 mm/min abgezogen. Als Schälfestigkeit wird die dafür im Mittel erforderliche Kraft in N/2cm als Mittelwert aus den Ergebnissen von drei Prüfkörpern angegeben.

d) Prüfung der Oberflächenklebrigkeit (quickstick) als Maß für die Klebrigkeit (in Anlehnung an FINAT FTM 1)

Ein Substrat (40x135 mm) wird waagerecht auf einer Platte in die unteren Backen einer Zugprüfmaschine eingeklemmt. Der Abstand zwischen der Unterseite der oberen Klemmbacken und der Substratoberfläche beträgt 30 mm. In die oberen Klemmbacken wird der Etiketten-Prüfstreifen mit einer Größe von 20 x 250 mm zu einer Schleife an beiden Enden festgeklemmt. Die oberen Klemmbacken werden nach unten gefahren, wobei die Schleife auf dem Substrat in Längsrichtung aufklebt und dort ohne zusätzlichen Druck und ohne zusätzliche Verweilzeit mit einer Geschwindigkeit von 300 mm/min wieder nach oben abgezogen wird. Nach jeder Einzelmessung wird das Substrat erneuert. Als Oberflächenklebrigkeit wird die im Mittel gemessene maximale Abzugskraft in N als

Mittelwert aus den Ergebnissen von drei Prüfkörpern angegeben.

Zusätzlich wird das Bruchbild beurteilt. Dabei bedeuten:

A adhäsiver Bruch (kein Rückstand auf dem Substrat)

K kohäsiver Bruch (Trennung im Klebstoff)

F Film: dünner, nicht klebender Film auf dem Substrat; Klebstoff bleibt auf dem Papierstreifen

PR Papier reißt

Tabelle 1

| Eigenschaften | | | | |
|---|---|---|---|---|
| Dispersion | Quickstick in N V=300 mm/min | Peel in N V=75 mm/min | | Shear in min. 1/2 X 1/2 inch 20 min., 500 g |
| | | Chrom.kz. 20 min. | PE,kz. 20 min. | |
| Vergleichsbeispiel 17 | 9,0 A | 7,2 F | 4,2 A | 5 K |
| Beispiel 17 | 9,7 A | 8,6 F | 4,0 A | 45 F |
| Beispiel 18 | 9,1 A | 10,9 A | 4,6 A | 76 F |
| Beispiel 19 | 8,1 A | 13,5 PR | 5,3 A/K | 118 F |

Die Ergebnisse in Tab. 1 zeigen, dass durch die Quellungspolymerisation die Kohäsionsfestigkeit des Polymerdispersions-Haftklebstoffs deutlich verbessert wird, die Adhäsionseigenschaften des Polymerdispersions-Haftklebstoffs nicht beeinflusst oder leicht verbessert werden und bei tBMA-Anteilen unter 10 % die Klebrigkeit nicht beeinflusst wird.

VB20: Vergleichsbeispiel 20 ist eine kommerziell erhältliche Dispersion für PSA-Anwendungen (PSA = pressure sensitive adhesive), Acronal A220 (BASF AG). Acronal A220 hat folgende Eigenschaften: Glastemperatur - 43 °C (DSC-midpoint), Teilchengröße 290 nm, Feststoffgehalt 60 %, pH etwa 6,8. Die Eigenschaften der Dispersion sind in Tab. 2 angegeben.

B20: Beispiel 20 beschreibt eine Quellungspolymerisation, ausgeführt mit Acronal A220, mit 6 % tBMA als Quellungsmonomer. In einen gerührten, 2 1 Glasreaktor werden 1000 g Acronal A220 und 27,4 g Wasser gegeben. Der Reaktorinhalt wird bei Zimmertemperatur 30 Minuten mit Stickstoff gespült und 36,1 g tBMA werden zugegeben. Unter Stickstoff als Schutzgas wird das Quellen der vorhandenen Polymerpartikel durch tBMA 10 Minuten bei Zimmertemperatur durchgeführt, bevor der Reaktor auf 60 °C erhitzt wird. Wenn der Reaktorinhalt 60 °C erreicht, werden 1,82 g einer 70 %igen wässrigen tBHP-Lösung und 9,74 g einer 13,1 %igen AcBS-Lösung getrennt voneinander in den Reaktor gegeben. Die Polymerisation des tBMA wird 1,5 Stunden bei 60 °C durchgeführt. Die resultierende Dispersion wird auf Zimmertemperatur abgekühlt und durch ein 150 µm Filter filtriert. Es ist kein Koagulat vorhanden. Die fertige Dispersion hat einen Gesamtfeststoffgehalt von 59,8 %, einen pH von 6,8 und einen mittleren Teilchendurchmesser von 290 nm, gemessen mittels Photonenkorrelationsspektroskopie (Nanosizer). Die Glastemperatur des Acronal A220 der ersten Stufe ist - 43 °C und die von Poly(tBMA) ist 105 °C. Die Eigenschaften der Dispersion sind in Tab. 2 angegeben.

Tabelle 2

| Eigenschaften | | | |
|---|---|---|---|
| Dispersion | Quickstick in N V=300 mm/min | Peel in N V=75 mm/min | Shear in min. 1/2 X 1/2 inch 20 min., 500 g |
| | | PE,kz. 20 min. | |
| Vergleichsbeispiel 20 | 10,7 A | 6,8 F | 246 K |

Tabelle 2 (fortgesetzt)

| Eigenschaften | | | |
|---|---|---|---|
| Dispersion | Quickstick in N V=300 mm/min | Peel in N V=75 mm/min | Shear in min. 1/2 X 1/2 inch 20 min., 500 g |
| | | PE,kz. 20 min. | |
| Beispiel 20 | 10,3 A | 13,7 F | > 24 Std. |

Die Ergebnisse in Tab. 2 zeigen, dass die Quellungspolymerisation die Kohäsionsfestigkeit und Adhäsionseigenschaften des Polymerdispersions-Haftklebstoffs verbessert und keinen merklichen Einfluss auf die Klebrigkeit hat.

VB21: Vergleichsbeispiel 21 ist Acronal V210 von BASF AG, eine kommerziell erhältliche Dispersion für PSA-Anwendungen. Acronal V210 hat folgende Eigenschaften: Glastemperatur-43 °C (DSC-midpoint), Teilchengröße 375 nm, Feststoffgehalt 68,6 % und pH etwa 4,5. Die Eigenschaften der Dispersion sind in Tab. 3 angegeben.

B21: Beispiel 21 beschreibt eine Quellungspolymerisation von Acronal V210 mit 6 % nBMA als Quellungsmonomer. In einen gerührten 2 1 Glasreaktor werden 600 g Acronal V210 und 11,3 g Wasser gegeben. Der Reaktorinhalt wird 30 Minuten bei Zimmertemperatur mit Stickstoff gespült und 24,7 g nBMA werden in den Reaktor gegeben. Die Quellung der vorhandenen Polymerpartikel durch nBMA wird 10 Minuten bei Zimmertemperatur vorgenommen, bevor der Reaktor auf 60 °C erhitzt wird, weiterhin unter Stickstoff als Schutzgas. Wenn der Reaktorinhalt 60 °C erreicht hat, werden 1,1 g einer 70 %igen wässrigen tBHP-Lösung und 5,84 g einer 13,1 %igen AcBS-Lösung getrennt voneinander in den Reaktor gegeben. Die Polymerisation von nBMA wird bei 60 °C 1,5 Stunden fortgeführt. Die resultierende Dispersion wird auf Zimmertemperatur abgekühlt, mit 10 %iger NaOH auf pH 6,6 neutralisiert und durch ein 150 µm Filter filtriert. Es ist kein Koagulat vorhanden. Die fertige Dispersion hat einen Gesamtfeststoffgehalt von 66,0 % und einen mittleren Teilchendurchmesser von 416 nm, gemessen mittels Photonenkorrelationsspektroskopie (Nanosizer). Die Glastemperatur von Acronal V210 ist -43 °C und die von Poly(nBMA) ist 20 °C. Die Eigenschaften der Dispersion sind in Tab. 3 angegeben.

B22: Beispiel 22 beschreibt eine Quellungspolymerisation von Acronal V210 mit 6 % S als Quellungsmonomer. Es wird wie in Beispiel 21 verfahren mit der Ausnahme, dass 24,7 g S anstelle von 24,7 g nBMA verwendet werden und dass mit 10 %iger NaOH auf pH 6,9 anstatt auf pH 6,6 neutralisiert wird. Die fertige Dispersion hat einen Gesamtfeststoffgehalt von 66,0 % und einen mittleren Teilchendurchmesser von 400 nm, gemessen mittels Photonenkorrelationsspektroskopie. Die Glastemperatur von Acronal V210 ist - 43 °C und die von Polystyrol 100°C. Die Eigenschaften der Dispersion sind in Tab. 3 angegeben.

Tabelle 3

| Eigenschaften | | | | |
|---|---|---|---|---|
| Dispersion | Quickstick in N V=300 mm/min | Peel in N V=75 mm/min | | Shear in min. 1/2 X 1/2 inch 20 min., 500 g |
| | | Chrom.kz. 20 min. | PE,kz. 20 min. | |
| Vergleichsbeispiel 21 | 11,1 A | 13,7 A | 4,7 A | 164 K |
| Beispiel 21 | 11,2 A | 17,4 F | 6,0 A | 417 F |
| Beispiel 22 | 10,1 A | 13,5 F | 5,1 F | 312 F |

Die Ergebnisse in Tab. 3 zeigen, dass die Quellungspolymerisation die Kohäsionsfestigkeit von Polymerdispersionshaftklebstoff signifikant verbessert, die Adhäsionseigenschaften nicht beeinflusst oder leicht verbessert und keinen merklichen Einfluss auf die Klebrigkeit hat.

VB23: Die Polymerdispersion aus Vergleichsbeispiel 21 wurde im Verhältnis 70:30 bezogen auf den Feststoffgehalt der Ausgangspolymerdispersion mit dem kommerziell erhältlichen Tackifier Takolyn 3179 gemischt. Die Eigenschaften der Dispersion sind in Tab. 4 angegeben.

B23: Beispiel 23 beschreibt eine Quellungspolymerisation von Acronal V210 mit 6 % tBMA als Quellungsmonomer. Es wurde auf dieselbe Weise verfahren wie in Beispiel 21 mit der Ausnahme, dass 24,7 g tBMA anstelle von 24,7 g nBMA verwendet wurden und mit 10 %iger NaOH auf pH 9,0 anstatt auf pH 6,6 gebracht wurde. Die fertige Dispersion hat einen Gesamtfeststoffgehalt von 68,3 % und einen mittleren Teilchendurchmesser von 380 nm, gemessen mittels Photonenkorrelationsspektroskopie. Die Glastemperatur von Acronal V210 ist -43 °C und die von Poly(tBMA) ist 105 °C. Die Polymerdispersion wurde analog zu Vergleichsbeispiel 23 mit Takolyn 3179 vermischt. Die Eigenschaften der Dispersion sind in Tab. 4 angegeben.

Tabelle 4

| Eigenschaften | | | | |
|---|---|---|---|---|
| Dispersion | Quickstick in N V=300 mm/min | Peel in N V=75 mm/min | | Shear in min. 1/2 X 1/2 inch 20 min., 500 g |
| | | Chrom.kz. 20 min. | PE,kz. 20 min. | |
| Vergleichs-Beispiel 23 | 20,2 F/K | 22,0 F/K | 20,1 F/K | 37 F |
| Beispiel 23 | 19,8 F/PR | 17,9 K/PR | 14,7A/PR | 85 K |

Die Ergebnisse in Tab. 4 zeigen, dass die Quellungspolymerisation die Kohäsionsfestigkeit der mit Tackifier versetzen Polymerdispersions-Haftklebstoffe signifikant verbessert und die Adhäsionseigenschaften und die Klebrigkeit nicht signifikant beeinflusst. Die etwas niedrigeren Werte für Adhäsion und Klebrigkeit spiegeln die Festigkeit des Papiersubstrats, nicht die des Haftklebstoffs wider.

**Patentansprüche**

1. Verfahren zur Herstellung wäßriger Polymerisatdispersionen, bei dem man zunächst aus Monomeren, die wenigstens eine ethylenisch ungesättigte Gruppe aufweisen, nach der Methode der radikalischen wäßrigen Emulsionspolymerisation ein in wäßrigem Medium in disperser Verteilung befindliches Polymerisat 1 erzeugt und danach in einer oder mehreren aufeinanderfolgenden Polymerisationsstufen i weitere Monomere im Beisein des im wäßrigen Medium in disperser Verteilung befindlichen Polymerisats 1 radikalisch polymerisiert, wobei

   a) das Polymerisat 1 eine Glasübergangstemperatur $Tg^1$ aufweist;
   b) die in jeder der Polymerisationsstufen i polymerisierten Monomeren so beschaffen sind, daß bei isolierter Homopolymerisation bzw. statistischer Copolymerisation dieser Monomere ein Polymerisat i erhalten würde, dessen Glasübergangstemperatur mit zunehmendem Molekulargewicht dem Grenzwert $Tg^i$ zustrebt;
   c) für jedes $Tg^i$ die Differenz $Tg^i - Tg^1 \geq 10°C$ beträgt;
   d) die Menge der zur Herstellung des in disperser Verteilung befindlichen Polymerisats 1 polymerisierten Monomeren, bezogen auf die Menge der im Verfahren insgesamt polymerisierten Monomeren, >90 Gew.-% und ≤99,9 Gew.-% beträgt;
   e) die Gesamtmenge der in allen Polymerisationsstufen i polymerisierten Monomeren, bezogen auf die Gesamtmenge der im Verfahren insgesamt polymerisierten Monomeren, ≥0,1 Gew.-% und <10 Gew.-% beträgt;
   f) in jeder der Polymerisationsstufen i die Zugabe der in dieser Polymerisationsstufe i zu polymerisierenden Monomeren ins Polymerisationsgefäß so erfolgt, daß bis zur Beendigung der Zugabe der Polymerisationsumsatz $U^i$ von in der Stufe i zu polymerisierenden und dem Polymerisationsgefäß bereits zugegebenen Monomeren zu keinem Zeitpunkt 50 mol-% überschreitet;
   g) die Gesamtmenge der zur Herstellung des Polymerisats 1 polymerisierten Monomeren, abgesehen von zwei konjugierte ethylenisch ungesättigte Gruppen aufweisenden Monomeren, nicht mehr als 5 Gew.-% an Monomeren umfaßt, die mehr als eine ethylenisch ungesättigte Gruppe aufweisen.

2. Verfahren nach Anspruch 1, **dadurch gekennzeichnet, daß** in jeder der Polymerisationsstufen i die Zugabe der in dieser Polymerisationsstufe i zu polymerisierenden Monomeren ins Polymerisationsgefäß so erfolgt, daß die Polymerisation im wesentlichen unterbrochen, die Zugabe durchgeführt, das resultierende Gemisch gegebenenfalls einige Zeit gerührt und anschließend die Polymerisation fortgesetzt wird.

3. Verfahren nach einem der vorhergehenden Ansprüche, **dadurch gekennzeichnet, daß** es lediglich eine Polymerisationsstufe i umfaßt.

4. Verfahren nach einem der vorhergehenden Ansprüche, **dadurch gekennzeichnet, daß** $Tg^1$ im Bereich von -60°C bis 110°C liegt.

5. Verfahren nach einem der vorhergehenden Ansprüche, **dadurch gekennzeichnet, daß** für jedes $Tg^i$ die Differenz $Tg^i$-$Tg^1$ im Bereich von 60 bis 190 °C, insbesondere von 60 bis 160°C, liegt.

6. Verfahren nach einem der Ansprüche 1 bis 5, **dadurch gekennzeichnet, daß** das Polymerisat 1 zu wenigstens 75 Gew.-% aus Estern der Acryl- und/oder Methacrylsäure mit $C_1$- bis $C_8$-Alkanolen oder deren Gemische mit Styrol und/oder Acrylnitril aufgebaut ist.

7. Verfahren nach einem der vorhergehenden Ansprüche, **dadurch gekennzeichnet, daß** die in den Polymerisationsstufen i polymerisierten Monomeren ausgewählt sind aus der Gruppe umfassend iso-Butylmethacrylat, n-Butylmethacrylat, tert.-Butylmethacrylat, iso-Bornylacrylat, iso-Bornylmethacrylat, 4-tert.-Butylcyclohexylmethacrylat, 3,3,5-Trimethylcyclohexylacrylat, 3,3,5-Trimethylcyclohexylmethacrylat, Acrylnitril, Styrol, α-Methylstyrol, α-Phenylstyrol und Methylmethacrylat.

8. Verfahren nach einem der Ansprüche 1 bis 3, **dadurch gekennzeichnet, daß** $Tg^1$ im Bereich von -70 °C bis 20 °C, bevorzugt von -60 °C bis 0°C, insbesondere bevorzugt im Bereich von -50 °C bis -20°C, liegt.

9. Verfahren nach Anspruch 8, **dadurch gekennzeichnet, daß** man wenigstens ein das Polymerisat 1 aufbauendes Monomer verwendet, das ausgewählt ist unter n-Butylacrylat, iso-Butylacrylat, Hexylacrylat, n-Octylacrylat, 2-Ethylhexylacrylat, 2-Ethylhexylmethacrylat, Decylacrylat, Laurylacrylat, Stearylacrylat und iso-Bornylacrylat.

10. Verfahren nach einem der Ansprüche 8 oder 9, **dadurch gekennzeichnet, daß** in der Polymerisationsstufe 1 Comonomere verwendet werden, die ausgewählt sind unter Styrol, Methylacrylat, Methylmethacrylat, Ethylacrylat, tert.-Butylacrylat, tert.-Butylmethacrylat, Vinylacetat, Vinylpropionat, Hydroxyethylacrylat, Hydroxypropylacrylat, n-Butylmethacrylat, Acrylnitril, Methacrylnitril, Acrylsäure, Methacrylsäure, Acrylamid und Methacrylamid.

11. Verfahren nach einem der vorhergehenden Ansprüche, **dadurch gekennzeichnet, daß** die Polymerisationstemperatur in den Polymerisationsstufen i ≥40°C bis ≤80°C beträgt.

12. Verfahren nach einem der vorhergehenden Ansprüche, **dadurch gekennzeichnet, daß** die radikalische Polymerisation in den Polymerisationsstufen i unter Mitverwendung von tert.-Butylhydroperoxid oder Cumolhydroperoxid initiiert wird.

13. Wäßrige Polymerisatdispersionen, erhältlich nach einem Verfahren gemäß einem der vorhergehenden Ansprüche.

14. Polymerisatpulver, erhältlich durch Sprühtrocknung einer wäßrigen Polymerisatdispersion gemäß Anspruch 13.

15. Verwendung der gemäß einem der Ansprüche 8 bis 12 erhältlichen wäßrigen Polymerisatdispersionen als Haftklebstoffe.

16. Verwendung wäßriger Polymerisatdispersionen gemäß Anspruch 13 oder der Polymerisatpulver gemäß Anspruch 14 als Klebstoffe, oder als Bindemittel für Papierstreichmassen, oder als Bindemittel für Vliesstoffe, oder als Bindemittel für Lederbeschichtungen, oder als Bindemittel für gefüllte und/oder pigmentierte Anstrichfarben, oder als Bindemittel für Kunstharzputze, oder als Bindemittel für Beschichtungen von Massen auf Polyurethanbasis.

17. Polymerisate, erhältlich durch Isolierung aus einer wäßrigen Polymerisatdispersion gemäß Anspruch 13.

## Claims

1. A process for preparing aqueous polymer dispersions, where first of all monomers having at least one ethylenically unsaturated group are polymerized by the method of free-radical aqueous emulsion polymerization to give a polymer 1, in disperse distribution in the aqueous medium, and then, in one or more successive polymerization stages

i, further monomers are subjected to free-radical polymerization in the presence of the polymer 1 that is in disperse distribution in the aqueous medium, with the proviso that

a) the polymer 1 has a glass transition temperature $Tg^1$;

b) the monomers polymerized in each of the polymerization stages i are such that isolated homopolymerization or random copolymerization of these monomers would give a polymer i whose glass transition temperature tends with increasing molecular weight toward the limit value $Tg^i$;

c) for each $Tg^i$ the difference $Tg^i$-$Tg^1$ is $\geq$10°C;

d) the amount of the monomers polymerized to prepare the polymer 1 in disperse distribution, based on the amount of all of the monomers polymerized in the process, is >90% by weight and $\leq$99.9% by weight;

e) the total amount of the monomers polymerized in all polymerization stages i, based on the total amount of all of the monomers polymerized in the process, is $\geq$0.1% by weight and <10% by weight;

f) in each of the polymerization stages i, the addition of the monomers to be polymerized in this polymerization stage i to the polymerization vessel is made such that at no time up to the end of the addition does the degree of polymerization $U^i$ of monomers to be polymerized in stage i and monomers already added to the polymerization vessel exceed 50 mol-%;

g) the total amount of the monomers polymerized to prepare the polymer 1, apart from monomers having two conjugated ethylenically unsaturated groups, does not embrace more than 5% by weight of monomers having more than one ethylenically unsaturated group.

**2.** A process as claimed in claim 1, wherein in each of the polymerization stages i the addition of the monomers to be polymerized in this polymerization stage i to the polymerization vessel is made such that the polymerization is substantially interrupted, the addition is made, the resulting mixture is stirred for a certain time if desired, and then the polymerization is continued.

**3.** A process as claimed in either of the preceding claims, which comprises only one polymerization stage i.

**4.** A process as claimed in any of the preceding claims, wherein $Tg^1$ is from -60°C to 110°C.

**5.** A process as claimed in any of the preceding claims, wherein for each $Tg^i$ the difference $Tg^i$-$Tg^1$ is from 60 to 190°C, in particular from 60 to 160°C.

**6.** A process as claimed in any of claims 1 to 5, wherein at least 75% by weight of the composition of the polymer 1 is accounted for by esters of acrylic and/or methacrylic acid with $C_1$- to $C_8$-alkanols or mixtures thereof with styrene and/or acrylonitrile.

**7.** A process as claimed in any of the preceding claims, wherein the monomers polymerized in the polymerization stages i are selected from the group consisting of isobutyl methacrylate, n-butyl methacrylate, tert-butyl methacrylate, isobornyl acrylate, isobornyl methacrylate, 4-tert-butylcyclohexyl methacrylate, 3,3,5-trimethylcyclohexyl acrylate, 3,3,5-trimethylcyclohexyl methacrylate, acrylonitrile, styrene, $\alpha$-methylstyrene, $\alpha$-phenylstyrene and methyl methacrylate.

**8.** A process as claimed in any of claims 1 to 3, wherein $Tg^1$ is in the range from -70°C to 20°C, preferably from -60°C to 0°C and, with particular preference, in the range from -50°C to -20°C.

**9.** A process as claimed in claim 8, wherein at least one monomer making up the polymer 1 is used which is selected from n-butyl acrylate, isobutyl acrylate, hexyl acrylate, n-octyl acrylate, 2-ethylhexyl acrylate, 2-ethylhexyl methacrylate, decyl acrylate, lauryl acrylate, stearyl acrylate and isobornyl acrylate.

**10.** A process as claimed in either of claims 8 or 9, wherein comonomers are used in the polymerization stage 1 which are selected from styrene, methyl acrylate, methyl methacrylate, ethyl acrylate, tert-butyl acrylate, tert-butyl methacrylate, vinyl acetate, vinyl propionate, hydroxyethyl acrylate, hydroxypropyl acrylate, n-butyl methacrylate, acrylonitrile, methacrylonitrile, acrylic acid, methacrylic acid, acrylamide and methacrylamide.

**11.** A process as claimed in any of the preceding claims, wherein polymerization in the stages i is carried out at from ≥40°C to ≤80°C.

**12.** A process as claimed in any of the preceding claims, wherein the free-radical polymerization in the polymerization stages i is initiated with the use of tert-butyl hydroperoxide or cumene hydroperoxide.

**13.** An aqueous polymer dispersion obtainable by a process as claimed in any of the preceding claims.

**14.** A polymer powder obtainable by spray-drying an aqueous polymer dispersion as claimed in claim 13.

**15.** The use of an aqueous polymer dispersion obtainable as claimed in any of claims 8 to 12 as a pressure-sensitive adhesive.

**16.** The use of an aqueous polymer dispersion as claimed in claim 13 or of a polymer powder as claimed in claim 14 as an adhesive or as a binder for paper coating slips or as a binder for nonwovens or as a binder for leather coatings or as a binder for filled and/or pigmented paints or as a binder for synthetic-resin renders or as a binder for coatings of polyurethane-based compositions.

**17.** A polymer obtainable by isolating an aqueous polymer dispersion as claimed in claim 13.

**Revendications**

**1.** Procédé de fabrication de dispersions aqueuses de polymère, **caractérisé en ce que** l'on fabrique dans un premier temps, selon un procédé de polymérisation en émulsion aqueuse par voie radicalaire, un polymère 1 dispersé en milieu aqueux, à partir de monomères contenant au moins un groupe à insaturation éthylénique, et que l'on soumet ensuite des monomères supplémentaires à une polymérisation par voie radicalaire en présence du polymère 1 dispersé en milieu aqueux, en suivant une ou plusieurs étapes de polymérisation i successives, **caractérisées en ce que**

a) le polymère 1 présente une température de transition vitreuse $Tg^1$;
b) les monomères polymérisés dans chacune des étapes de polymérisation i possèdent des propriétés de telle sorte que, lors qu'une homopolymérisation isolé ou une copolymérisation statistique de ces monomères, on obtient un polymère i ayant une température de transition vitreuse qui tend vers une valeur limite $Tg^i$ lorsque la masse moléculaire augmente;
c) la différence $Tg^i$ - $Tg^1$ est ≥ 10°C pour chaque $Tg^i$;
d) la quantité de monomères polymérisés pour la fabrication du polymère 1 qui est présent sous forme de dispersion, par rapport à la quantité de la totalité des monomères polymérisés dans le procédé, est > 90 % en poids et < 99,9 % en poids;
e) la quantité totale des monomères polymérisés dans la totalité des étapes de polymérisation i, par rapport à la quantité totale de tous les monomères polymérisés dans le procédé, est ≥ 0,1 % en poids et < 10 % en poids;
f) dans chacune des étapes de polymérisation i, l'ajout dans le réacteur de polymérisation des monomères destinés à être polymérisés à cette étape de polymérisation i est réalisé de telle sorte que, jusqu'à ce que l'ajout soit achevé, la conversion de la polymérisation $U^i$ des monomères, qui sont destinés à la polymérisation au cours de l'étape i et qui sont déjà introduits dans le réacteur de polymérisation, n'excède à aucun moment 50 % en moles;
g) la quantité totale des monomères polymérisés pour la fabrication du polymère 1 ne comprend pas plus de 5 % en poids de monomères ayant plus qu'un groupe à insaturation éthylénique, mise à part les monomères possédant deux groupes à insaturation éthylénique conjugués.

**2.** Procédé selon la revendication 1, **caractérisé en ce que** dans chacune des étapes de polymérisation i l'ajout dans le réacteur de polymérisation des monomères destinés à être polymérisés à cette étape de polymérisation i est réalisé de telle sorte que la polymérisation est interrompue pour l'essentiel, l'ajout est effectué, le mélange obtenu est éventuellement agité un certain temps et que la polymérisation est reprise ensuite.

3. Procédé selon l'une quelconque des revendications précédentes, **caractérisé en ce qu'**il ne contient qu'une seule étape de polymérisation i.

4. Procédé selon l'une quelconque des revendications précédentes, **caractérisé en ce que** $Tg^1$ est compris dans la plage de -60°C à 110°C.

5. Procédé selon l'une quelconque des revendications précédentes, **caractérisé en ce que** la différence $Tg^i$ - $Tg^1$ est comprise dans la plage de 60°C à 190°C, en particulier de 60°C à 160°C, pour chaque $Tg^i$.

6. Procédé selon l'une des revendications 1 à 5, **caractérisé en ce que** le polymère 1 est constitué au moins de 75 % en poids d'esters de l'acide acrylique et/ou méthacrylique avec des alcanols en $C_1$ à $C_8$ ou leurs mélanges avec le styrène et/ou l'acrylonitrile.

7. Procédé selon l'une quelconque des revendications précédentes, **caractérisé en ce que** l'on choisit les monomères destinés à être polymérisés à l'étape de polymérisation i dans le groupe formé par le méthacrylate d'isobutyle, le méthacrylate de n-butyle, le méthacrylate de t-butyle, l'acrylate d'isobornyle, le méthacrylate d'isobornyle, le méthacrylate de 4-tert. butylcyclohexyle, l'acrylate de 3,3,5-triméthylcyclohexyle, le méthacrylate de 3,3,5-triméthylcyclohexyle, l'acrylonitrile, le styrène, l'α-méthylstyrène, l'α-phénylstyrène et le méthacrylate de méthyle.

8. Procédé selon l'une des revendications 1 à 3, **caractérisé en ce que** $Tg^1$ est compris dans la plage de -70°C à 20°C, de préférence de -60°C à 0°C, de manière particulièrement préférée de -50°C à -20°C.

9. Procédé selon la revendication 8, **caractérisé en ce que** l'on met en oeuvre en tant que constituant du polymère 1, au moins un monomère choisi dans le groupe formé par l'acrylate de n-butyle, l'acrylate d'isobutyle, l'acrylate d'hexyle, l'acrylate de n-octyle, l'acrylate de 2-éthylhexyle, le méthacrylate de 2-éthylhexyle, l'acrylate de décyle, l'acrylate de lauryle, l'acrylate de stéaryle et l'acrylate d'iso-bornyle.

10. Procédé selon l'une des revendications 8 ou 9, **caractérisé en ce que** l'on met en oeuvre en tant que comonomères dans l'étape de polymérisation 1, ceux choisis dans le groupe formé par le styrène, l'acrylate de méthyle, le méthacrylate de méthyle, l'acrylate d'éthyle, l'acrylate de t-butyle, le méthacrylate de t-butyle, l'acétate de vinyle, le propionate de vinyle, l'acrylate d'hydroxyéthyle, l'acrylate d'hydroxypropyle, le méthacrylate de n-butyle, l'acrylonitrile, le méthacrylnitrile, l'acide acrylique, l'acide méthacrylique, l'acrylamide et le méthacrylamide.

11. Procédé selon l'une quelconque des revendications précédentes, **caractérisé en ce que** la température de polymérisation aux étapes de polymérisation i est comprise dans la plage de ≥40°C à ≤80°C.

12. Procédé selon l'une quelconque des revendications précédentes, **caractérisé en ce que** la polymérisation par voie radicalaire aux étapes de polymérisation i est amorcée en présence de l'hydroperoxyde de t-butyle ou de l'hydroperoxyde de cumène.

13. Dispersions de polymère aqueuses que l'on peut obtenir selon un procédé selon l'une quelconque des revendications précédentes.

14. Poudre de polymère que l'on peut obtenir par le moyen du séchage par pulvérisation d'une dispersion de polymère aqueuse selon la revendication 13.

15. Mise en oeuvre d'une dispersion de polymère aqueuse que l'on peut obtenir selon l'une quelconque des revendications 8 à 10 en tant que colles autoadhésives.

16. Mise en oeuvre des dispersions de polymère aqueuses selon la revendication 13 ou des poudres de polymère selon la revendication 14, ou en tant que colles ou en tant que liant pour les pâtes de couchage pour papier, ou en tant que liant pour étoffes de nappe de fibres, ou en tant que liant pour revêtements de cuir, ou en tant que liant pour peintures chargées et/ou pigmentées, ou en tant que liant pour les enduits à base de résine synthétique, ou en tant que liant pour les revêtements de pâtes à base de polyuréthane.

17. Polymères que l'on peut obtenir par séparation à partir d'une dispersion de polymère aqueuse selon la revendication 13.